(19) **Europäisches Patentamt European Patent Office Office européen des brevets**

(11) **EP 3 696 766 A1**

(12) **EUROPEAN PATENT APPLICATION**

(43) Date of publication:
**19.08.2020 Bulletin 2020/34**

(51) Int Cl.:
**G06Q 50/18** (2012.01)     **G06Q 20/40** (2012.01)

(21) Application number: **20154574.6**

(22) Date of filing: **30.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.02.2019 JP 2019024538**

(71) Applicant: **FUJITSU LIMITED Kanagawa 211-8588 (JP)**

(72) Inventor: **Suzuki, Dai Kanagawa, 211-8588 (JP)**

(74) Representative: **Hoffmann Eitle Patent- und Rechtsanwälte PartmbB Arabellastraße 30 81925 München (DE)**

(54) **PROGRAM, SYSTEM AND METHOD FOR DETERMINING CREDIT WORTHINESS OF A USER**

(57)     A communication program causes a communication apparatus which participates in a data distribution network to execute a process including: generating history information of transactions by analyzing a distributed ledger that is shared among apparatuses which participate in the data distribution network, and that records information of the transactions having been performed through the data distribution network; calculating credit-worthiness of each of users who has performed transactions through the data distribution network, by using the history information; and transmitting the calculated credit-worthiness, in response to a request from a terminal configured to perform transactions via the communication apparatus, to the terminal.

FIG. 1

**Description**

FIELD

The embodiments discussed herein are related to a recording medium, a communication apparatus, and a communication method.

BACKGROUND

In recent years, there has been an increasing expectation for digital transformation to create new services and businesses by distributing and utilizing various types of digitized data. As one method for distributing data in a case where the data is dispersed in a plurality of sites such as among different enterprises and organizations, it is proposed to share an electronic file by peer-to-peer communication between devices.

As a related art, a distributed ledger system is proposed in which a record registered by a user, key information, a processing program associated with attribute-based encryption, and the like are stored in a distributed ledger storage unit that is provided in each node (for example, Japanese Laid-open Patent Publication No. 2018-098564, and the like). In this system, record registration, encryption processing based on attribute-based encryption, decryption processing, and the like are performed using programs recorded on the distributed ledger. There is also known a system in which a relationship between an ordering source company and an ordering destination candidate company is determined by using an association degree indicating a contract result of each pair in a search path from the ordering source company, passing through pairs of companies having contract results, to the ordering destination candidate (for example, Japanese Laid-open Patent Publication No. 2018-124930, and the like). Furthermore, there is proposed a user evaluation system in which reliability of a transaction partner is measured by using a time score representing product delivery smoothness, a relation score representing mutual relationship strength between auction users, and an evaluation value difference score for evaluating a difference in auction experience (for example, Japanese Laid-open Patent Publication No. 2011-044066, and the like).

When data transactions are performed between users such as enterprises, each user to perform the transaction checks the presence of the transaction partner, and determines whether or not the partner may be trusted as an entity who is able to correctly perform the transaction (credit decision). The credit decision is made by the enterprise to perform the transaction before the transaction is started, but it is difficult for each enterprise itself to obtain the information used for making the credit decision. For this reason, in many cases, information used when a credit decision is to be made is obtained from a specialized research company, or a specific organization evaluates credit-worthiness. However, when a specific organization manages the information used for making the credit decision, since the authority is centralized to the organization managing the information used for making the credit decision, it is possible for the organization to commit an illegal action. When a specific organization evaluates credit-worthiness of users, there is a risk that an illegal action is similarly committed. In a case where such an illegal action is committed, there is a risk that the credibility of the whole platform used for data transactions may be degraded.

It is an object of the embodiments to provide a highly reliable method for making a credit decision as one aspect.

SUMMARY

According to an aspect of the embodiments, a communication program causes a communication apparatus which participates in a data distribution network to execute a process, the process includes: generating history information of transactions by analyzing a distributed ledger that is shared among apparatuses which participate in the data distribution network, and that records information of the transactions having been performed through the data distribution network; calculating credit-worthiness of each of users who has performed transactions through the data distribution network, by using the history information; and transmitting the calculated credit-worthiness, in response to a request from a terminal configured to perform transactions via the communication apparatus, to the terminal.

BRIEF DESCRIPTION OF DRAWINGS

FIG. 1 is a diagram describing an example of a communication method according to an embodiment;
FIG. 2 is a diagram describing an example of a configuration of a communication apparatus;
FIG. 3 is a diagram describing an example of a hardware configuration of a communication apparatus;
FIG. 4 is a diagram describing an example of a network;
FIG. 5 is a diagram describing an example of information recorded in a distributed ledger;

FIG. 6 is a diagram describing an example of a method for updating a distributed ledger and an example of a method for extracting a transaction history;

FIG. 7 is a diagram describing an example of converted data;

FIG. 8 is a diagram describing an example of a conversion process;

FIG. 9 is a flowchart describing an example of a method for extracting a transaction history;

FIG. 10 is a flowchart describing an example of a calculation process of credit-worthiness;

FIG. 11 is a diagram describing an example of a method for calculating credit-worthiness;

FIG. 12 is a diagram describing an example of converted data and an example of a credit graph;

FIG. 13 is a diagram describing an example of a transaction using a credit graph;

FIG. 14 is a diagram describing an example of a method for generating converted data in a second embodiment;

FIG. 15A is a flowchart describing an example of a calculation process of credit-worthiness;

FIG. 15B is a flowchart describing the example of the calculation process of the credit-worthiness; and

FIG. 16 is a diagram describing an example of a network according to a third embodiment.

## DESCRIPTION OF EMBODIMENTS

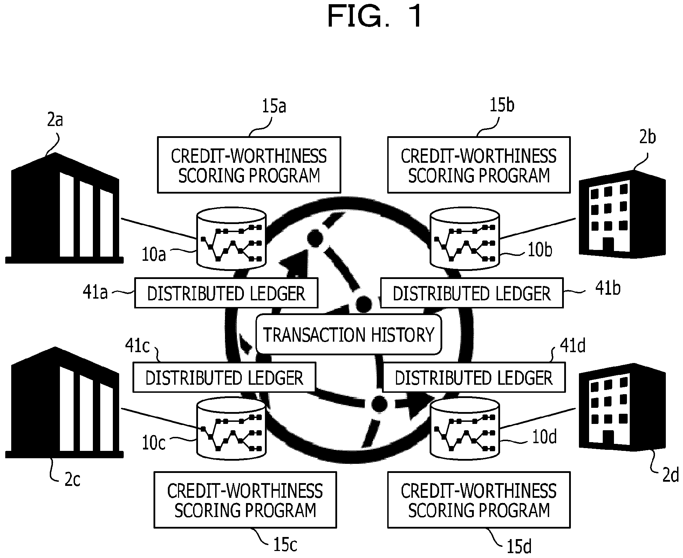

FIG. 1 is a diagram describing an example of a communication method according to an embodiment. In a system illustrated in FIG. 1, communication apparatuses 10a to 10d are included in a network serving as a platform in which data transactions are performed, and terminals 2a to 2d are coupled to the communication apparatuses 10a to 10d, respectively. For example, each of the terminals 2a to 2d may be a terminal operated by an operator working for an enterprise that performs transactions, and a communication apparatus 10 may be a gateway apparatus installed by the enterprise that performs transactions.

The communication apparatuses 10a to 10d include distributed ledgers 41 (41a to 41d) and credit-worthiness scoring programs 15 (15a to 15d), respectively. In the distributed ledger 41, information is recorded in a form impossible to be falsified, by using a blockchain technology, and is updated as appropriate. Therefore, it may be said that the communication apparatuses 10 share the information recorded in the distributed ledgers 41. The distributed ledgers 41 include a history of all accesses to data on the platform. Further, the distributed ledgers 41 may also include attribute information of data to be transaction targets. In the following description, attribute information of data may be referred to as metadata of the data. The access to the data on the platform includes, for example, acquisition of data, registration of metadata and the like. Accordingly, the distributed ledgers 41 include records of metadata registrations and records of data acquisitions, for all the data possible to be traded via the platform. Therefore, the credit-worthiness scoring program 15 operating in each of the communication apparatuses 10 is able to generate a transaction history for all transactions performed through the network, by analyzing the distributed ledger 41.

An operator of an enterprise intending to start a transaction with another enterprise with whom any transaction has not been performed yet through the network, requests the communication apparatus 10 to provide information on the credit-worthiness, by operating a terminal 2. For example, an operator of the terminal 2a requests the communication apparatus 10a to provide information on the enterprise credit-worthiness. Then, the credit-worthiness scoring program 15a operating on the communication apparatus 10a generates a transaction history by using the distributed ledger 41a, and calculates credit-worthiness of each enterprise by using the generated history information. For example, credit-worthiness of a certain enterprise may be calculated by using the number of transaction partners of the enterprise, the number of transactions of the enterprise, the credit-worthiness of the transaction partners or the like. The communication apparatus 10a transmits the information on the credit-worthiness obtained by the processing of the credit-worthiness scoring program 15a, to the terminal 2a. By using the information on the credit-worthiness, the operator of the terminal 2a is able to determine whether or not another enterprise, with whom a transaction is to be performed, may be trusted as a transaction partner, and then is able to start the transaction.

In the above description, a case where the credit-worthiness calculation or the like is performed in the communication apparatus 10a is explained, but another communication apparatuses 10 is also able to perform the credit-worthiness calculation or the like in response to a request from the terminal 2 communicating with the communication apparatus 10 in the same manner as the communication apparatus 10a. The network illustrated in FIG. 1 is an example, and may be changed in accordance with the implementation. For example, the number of communication apparatuses 10 and the number of terminals 2 in the network are arbitrary. The number of terminals 2 coupled to one communication apparatus 10 is also arbitrary.

By using the method according to the embodiment, the communication apparatus 10 is able to calculate the credit-worthiness of each enterprise by using the information in the distributed ledger 41 shared by all the communication apparatuses 10. Therefore, the user is able to carry out credit management by using the credit-worthiness calculated in the communication apparatus 10 installed by the user himself/herself. Since the user does not have to obtain information used for making a credit decision from a specialized research company, there is no fear that a specific organization such as a research company commits an illegal action. Since the information in the distributed ledger 41 is managed by the blockchain technology, there is no fear of falsification. Therefore, according to the method of the embodiment, the user is able to acquire information on the credit-worthiness of each of the transaction partners by using an accurate transaction history. Thus, in the method according to the embodiment, unlike a case in which credit-worthiness with respect to another enterprise is acquired from a specific organization, there is no fear of an illegal action being committed in an agency where the credit-worthiness is calculated. This makes it possible for the user to perform a highly reliable credit evaluation.

<Apparatus Configuration>

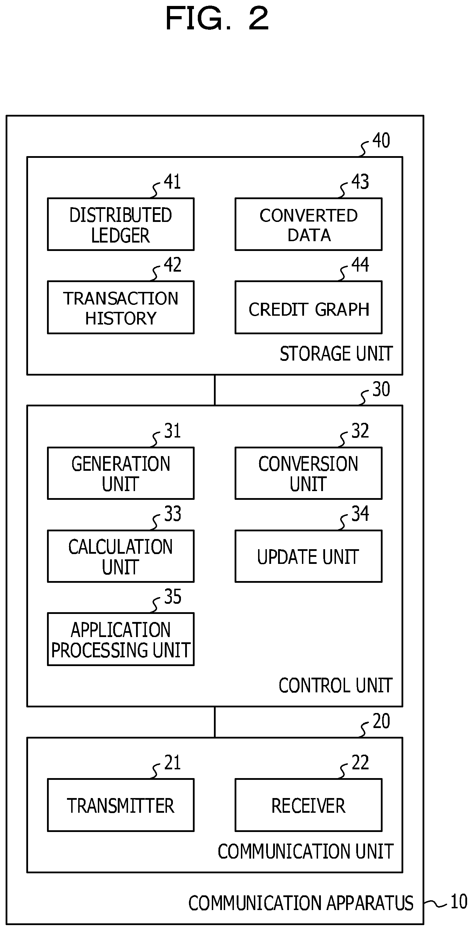

FIG. 2 is a diagram describing an example of a configuration of the communication apparatus 10. The communication apparatus 10 includes a communication unit 20, a control unit 30, and a storage unit 40. The communication unit 20 includes a transmitter 21 and a receiver 22. The transmitter 21 transmits packets to other apparatuses such as the terminal 2 and other communication apparatuses 10. The receiver 22 receives packets transmitted from other apparatuses such as the terminal 2 and the other communication apparatuses 10.

The storage unit 40 includes the distributed ledger 41. The storage unit 40 is able to store a transaction history 42, a converted data 43, and a credit graph 44 in accordance with processing carried out by the control unit 30. The distributed ledger 41 includes metadata registered via any of the communication apparatuses 10 in the network, a registration history of the metadata, an acquisition history of data, and the like. The transaction history 42 is history information of transactions that is generated based on the distributed ledger 41. The converted data 43 is information obtained by converting the transaction history 42 into a form suitable for the processing to be carried out in the control unit 30. The credit graph 44 is data obtained by summarizing the calculation results of credit-worthiness for each enterprise. Examples of the distributed ledger 41, the transaction history 42, the converted data 43, and the credit graph 44 will be given later.

The control unit 30 includes a generation unit 31, a conversion unit 32, a calculation unit 33, an update unit 34, and an application processing unit 35. The generation unit 31 generates the transaction history 42 by using the distributed ledger 41. The conversion unit 32 generates the converted data 43 by converting the transaction history 42 into a form suitable for the processing to be carried out in the calculation unit 33. The calculation unit 33 calculates the credit-worthiness of each enterprise by using the converted data 43, and generates the credit graph 44 by using the obtained calculation result. The update unit 34 carries out update processing of the distributed ledger 41 based on the blockchain technology. At the time of updating the distributed ledger 41, the update unit 34 communicates with the other communication apparatuses 10 via the communication unit 20, so as to update the distributed ledger 41 in such a manner that the contents of the distributed ledgers 41 held by all the communication apparatuses 10 in the network are the same. The application processing unit 35 carries out processing by an application operating in the communication apparatus 10. For example, the application processing unit 35 is able to carry out processing for enabling a function of smart contracts in a consortium type blockchain technology or the like. In this case, the application processing unit 35 may also carry out authentication processing for the communication apparatus 10 and the terminal 2, and verification processing for the contents of the issued transactions. The application processing unit 35 may acquire the verification results in the other communication apparatuses 10 as appropriate, and may allow a specified communication to be made in a case where the communication apparatuses 10 of a specific rate in the cluster determine that the contents of the transaction are correct.

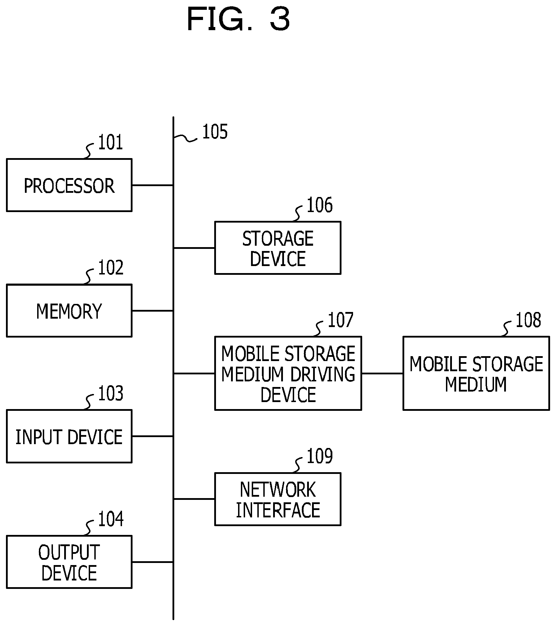

FIG. 3 is a diagram describing an example of a hardware configuration of the communication apparatus 10. The communication apparatus 10 includes a processor 101, a memory 102, a bus 105, and a network interface 109. The communication apparatus 10 may further include at least one or more of an input device 103, an output device 104, a storage device 106, and a mobile storage medium driving device 107.

The processor 101 is an arbitrary processing circuit, and may be a central processing unit (CPU), for example. The processor 101 operates as the control unit 30. The processor 101 is able to execute programs stored in the memory 102, the storage device 106, and the like. For example, the processor 101 may achieve the control unit 30 by executing the credit-worthiness scoring program 15 stored in the storage device 106 or the like. The memory 102 stores data obtained by the operation of the processor 101, data to be used for the processing in the processor 101 and the like, as appropriate. The storage device 106 stores programs, data, and the like, and provides the stored information to the processor 101 or the like, as appropriate. The memory 102, the storage device 106, and the like operate as the storage unit 40 in the communication apparatus 10.

The bus 105 couples the processor 101, the memory 102, the input device 103, the output device 104, the storage device 106, the mobile storage medium driving device 107, and the network interface 109 to each other so that the data is able to be transmitted and received to and from each other. The input device 103 is an arbitrary device used to input information, such as a keyboard, a mouse, a microphone, or a camera, and the output device 104 is an arbitrary device used to output data, such as a display. The mobile storage medium driving device 107 is able to output data in the memory 102, the storage device 106, and the like to a mobile storage medium 108, and is able to read out programs, data, and the like from the mobile storage medium 108. The mobile storage medium 108 may be an arbitrary storage medium possible to be carried, including a compact disc recordable (CD-R) and a digital versatile disk recordable (DVD-R). The network interface 109 carries out processing of making the communication apparatus 10 communicate with other apparatuses as appropriate. The network interface 109 operates as the communication unit 20.

<First Embodiment>

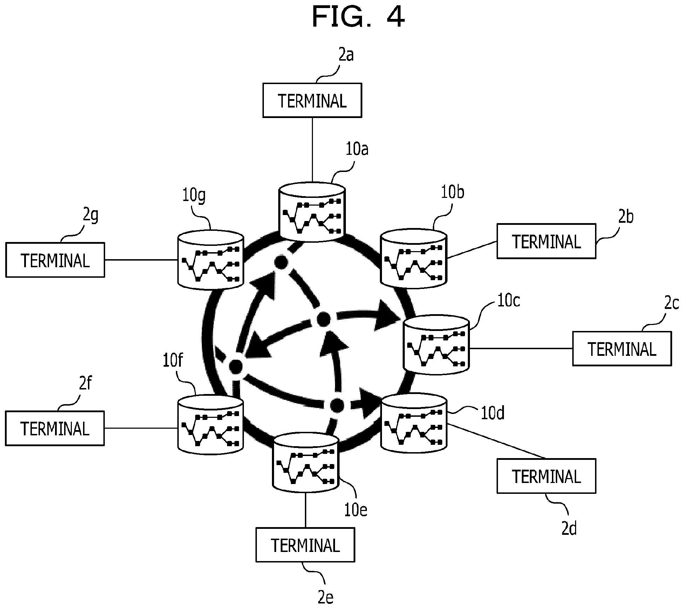

FIG. 4 is a diagram describing an example of a network. The network illustrated in FIG. 4 includes communication apparatuses 10a to 10g and terminals 2a to 2g. The terminals 2a to 2g are coupled to the communication apparatuses 10a to 10g, respectively. For example, each of the terminals 2a to 2g is considered to be a terminal operated by an operator working for an enterprise that performs transactions. It is assumed that each of communication apparatuses 10 shares the information in a distributed ledger 41 by communicating with each other. The communication apparatus 10 is able to calculate credit-worthiness and perform data transactions via other communication apparatuses 10 in response to a request from a terminal 2 coupled to the above communication apparatus 10.

In the following description, it is assumed that each enterprise stores transaction target data in the terminal 2 owned by the enterprise, and registers metadata of the transaction target data in the distributed ledger 41. It is assumed that the distributed ledger 41 includes metadata and an access history to data.

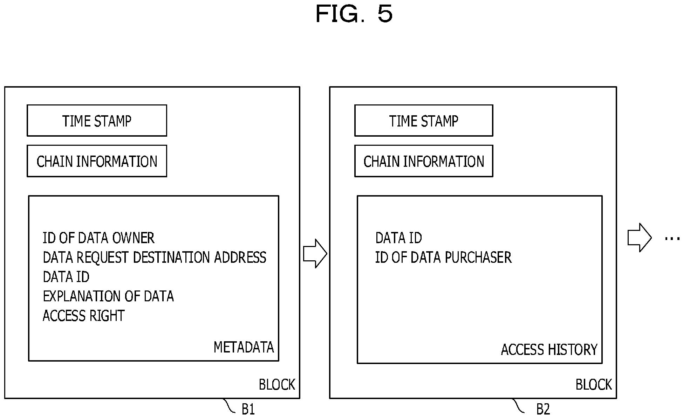

FIG. 5 is a diagram describing an example of information recorded in the distributed ledger 41. The distributed ledger 41 includes an arbitrary number of blocks, and each of the blocks includes information of at least one or more transactions. FIG. 5 illustrates an example of the distributed ledger 41 including blocks B1 and B2. Each block includes a time stamp, chain information, and data to be recorded. The time stamp indicates the time at which the block is generated. The chain information is information used for suppressing falsification of information within the block, and is, for example, a hashed value or the like of the previous block. The data to be recorded is information to be recorded in the block, and includes transaction information, metadata, and the like.

The block B1 in FIG. 5 is an example of a case in which metadata is registered as the data to be recorded. The metadata includes an identification (ID) of the owner of the data, an address of a data request destination, a data ID, an explanation of the data, and an access right. The ID of the owner of the data is an ID for identifying the user holding the information in which an attribute is recorded in the metadata. The address of the data request destination is an address of the access destination when the data corresponding to the metadata is acquired. The address of the data request destination may be, for example, an address of the communication apparatus 10 of an enterprise having registered the data. In this case, even when the data is held in the terminal 2, an acquisition request of metadata is sent to the communication apparatus 10 of the enterprise holding the data. The communication apparatus 10 acquires the data requested to be acquired from the terminal 2, and transmits the data to the apparatus attempting to acquire the data to be processed. At this time, the communication apparatus 10 causes the address of the data transmission source to be the address of the communication apparatus 10 itself, thereby concealing the address of the terminal 2 from the apparatus attempting to acquire the data. The apparatus attempting to acquire the data may be the communication apparatus 10 coupled to the terminal 2 of another enterprise attempting to acquire the data. The data ID is arbitrary identification information that makes it possible to uniquely specify the data specified by the metadata. For example, as the data ID, a hashed value of the data may be used. The explanation of the data is information for introducing the contents of the data. For example, in a case where the data is moving image data, an image of one scene in the moving image may be used as the explanation of the data. The access right is information designating a subject that is allowed to access the data. Therefore, the communication apparatus 10 transmits data only to the user permitted to access the data according to the access right information.

In an example of the block B2 in FIG. 5, an access history is recorded as data to be recorded. The access history includes a data ID for identifying data to be accessed, and information for specifying a user having accessed the data, such as an ID for identifying the purchaser of the data.

As described above with reference to FIG. 5, the distributed ledger 41 records the information for identifying a user as a supplier of the data possible to be acquired through the network, and the information of a user having purchased the data. Note that the blocks illustrated in FIG. 5 are examples. For example, information of a plurality of transactions may be included in one block.

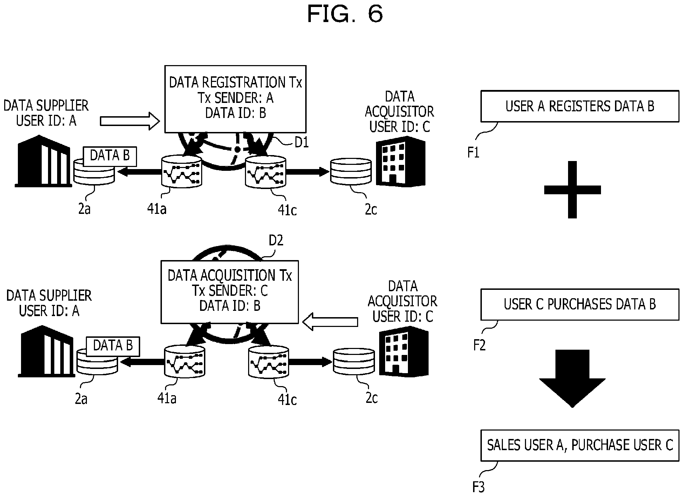

FIG. 6 is a diagram describing an example of a method for updating the distributed ledger 41 and an example of a method for extracting a transaction history 42. In the following description, in order to clarify the communication apparatus 10 in operation, a letter of the alphabet assigned to the communication apparatus 10 in operation may be described at the end of a reference symbol. For example, an update unit 34a is an update unit 34 of the communication apparatus 10a. Similarly, a receiver 22c is a receiver 22 included in the communication apparatus 10c.

For example, it is assumed that a user (user A) identified by an expression of user ID = A holds data (data B) indicated by an expression of data ID = B in the terminal 2a. In order to supply the data B to other users, the user A carries out the processing of registering metadata of the data B on the distributed ledger 41 in the network. At this time, the terminal 2a of the user A transmits a data registration transaction including the metadata of the data B to the communication apparatus 10a.

A receiver 22a of the communication apparatus 10a receives the data registration transaction. The update unit 34a registers the information reported by the data registration transaction in a distributed ledger 41a. Then, as illustrated in D1 of FIG. 6, the following information is registered in the distributed ledger 41a.

> Access type: data registration transaction (Tx)
> Tx sender: A
> Data ID: B

Further, the update unit 34a carries out the processing of transmitting the information reported by the data registration transaction for the data B to the other communication apparatuses 10b to 10g in the network (FIG. 4). Then, the information illustrated in D1 of FIG. 6 is also recorded in distributed ledgers 41b to 41g held by the communication apparatuses 10b to 10g, respectively.

Thereafter, it is assumed that a user (user C) identified by an expression of user ID = C attempts to acquire the data B. At this time, the terminal 2c of the user C transmits, to the communication apparatus 10c, a data acquisition transaction for requesting the data B.

The receiver 22c of the communication apparatus 10c receives the data acquisition transaction. When the user C has the access right to the data B requested by the data acquisition transaction, an application processing unit 35c requests the communication apparatus 10a to send the data B. An application processing unit 35a of the communication apparatus 10a acquires the data B from the terminal 2a, and transmits the acquired data B to the communication apparatus 10c. The application processing unit 35c of the communication apparatus 10c transmits the data B to the terminal 2c via a transmitter 21c. On the other hand, an update unit 34c registers, in the distributed ledger 41c, a fact that a data request with respect to the data B is made. In this case, as illustrated in D2 of FIG. 6, the following information is added to the distributed ledger 41c.

> Access type: data acquisition transaction (Tx)
> Tx sender: C
> Data ID: B

Further, the update unit 34c carries out the processing of transmitting, to the other communication apparatuses 10a, 10b, and 10d to 10g in the network (FIG. 4), a fact that the data acquisition has been performed by using the data acquisition transaction for the data B. As a result, the information illustrated in D2 of FIG. 6 is also recorded in any of the distributed ledgers 41 of the communication apparatuses 10a to 10g.

Next, a method for extracting the transaction history 42 will be described while taking as an example a case in which a transaction history for the data B is specified after the information illustrated in D2 of FIG. 6 is recorded in the distributed ledger 41. When a credit-worthiness calculation is requested from the terminal 2, the generation unit 31 of the communication apparatus 10 specifies a history of data registration and a history of data acquisition from the distributed ledger 41. For example, since the information indicated by an expression of data registration Tx sender = A and an expression of data ID = B is recorded in D1 within the distributed ledger 41, the generation unit 31 is able to specify a fact F1 that the user A has registered the data B. Similarly, since the information indicated by an expression of data acquisition Tx sender = C and the expression of data ID = B is recorded in D2 within the distributed ledger 41, the generation unit 31 is able to specify a fact F2 that the user C has acquired (purchased) the data B. By combining the fact F1 and the fact F2, the generation unit 31 specifies a fact F3 that a sales user of the data B is A, and a purchase user of the data B is C, as the transaction history 42.

The transaction history 42 for other data is extracted by the same processing. As discussed above, with reference to FIG. 6, the case in which the transaction history 42 is generated due to the communication apparatus 10 being requested to calculate the credit-worthiness, is taken as an example and explained, but the timing at which the transaction history 42 is generated may be arbitrarily changed in accordance with the implementation.

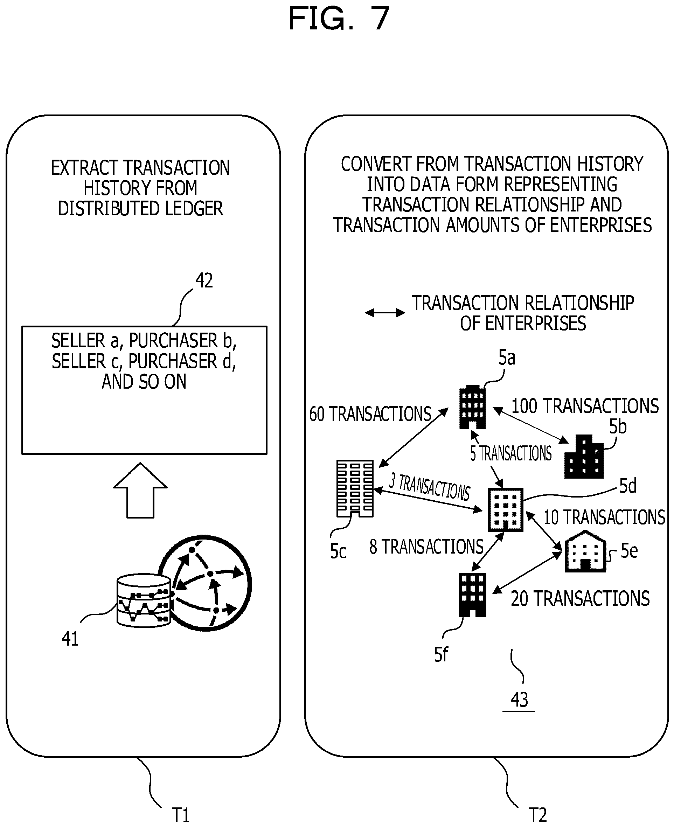

FIG. 7 is a diagram describing an example of converted data 43. T1 in FIG. 7 illustrates an example in which the transaction history 42 is extracted from the distributed ledger 41. The transaction history 42 illustrated in T1 is generated by the procedure having been explained with reference to FIG. 6. The first transaction history in the transaction history 42 indicates that the seller of the data is "a" and the purchaser thereof is "b". The second transaction history in the transaction history 42 indicates that the seller is "c" and the purchaser is "d".

When the generation of the transaction history 42 is completed, the conversion unit 32 converts the obtained transaction history 42 into a data form representing, for example, a transaction relationship and transaction amounts of enterprises, thereby generating the converted data 43. The conversion data 43 illustrated in T2 indicates that there are 100 transactions between an enterprise 5a and an enterprise 5b, 60 transactions between the enterprise 5a and an enterprise 5c, and five transactions between the enterprise 5a and an enterprise 5d. The converted data 43 also includes information indicating that there are three transactions between the enterprise 5c and the enterprise 5d, eight transactions between the enterprise 5d and an enterprise 5f, 10 transactions between the enterprise 5d and an enterprise 5e, and 20 transactions between the enterprise 5e and the enterprise 5f.

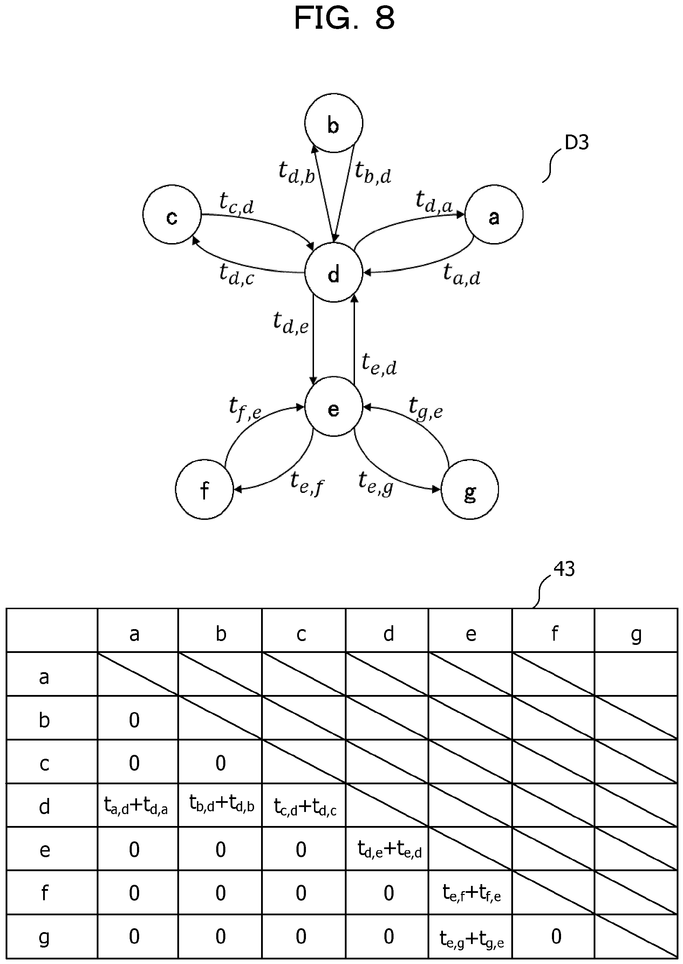

FIG. 8 is a diagram describing an example of the conversion process. Referring to FIG. 8, an example of a method for generating the converted data 43 from the transaction history 42 among the enterprises 5a to 5g will now be described. In the following example, the number of transactions is represented by t, and an enterprise as a seller and an enterprise as a purchaser are indicated by subscripts using a letter of the alphabet at the end of the reference symbol of each enterprise. The first character of the subscripts represents an enterprise as a seller, and the second character thereof represents an enterprise as a purchaser. For example, $t_{a, d}$ represents the number of transactions, where the enterprise 5a is a seller and the enterprise 5d is a purchaser.

The conversion unit 32 classifies transactions included in the transaction history 42 corresponding to the combinations of sellers and purchasers, and determines the number of transactions for each combination of the seller and the purchaser. For example, it is assumed that the number of transactions among the enterprises 5a to 5g is as illustrated in D3 of FIG. 8. That is, the enterprise 5a sells data to the enterprise 5d in a transaction of $t_{a, d}$, and purchases data from the enterprise 5d in a transaction of $t_{d, a}$. The enterprise 5b sells data to the enterprise 5d in a transaction of $t_{b, d}$, and purchases data from the enterprise 5d in a transaction of $t_{d, b}$. The enterprise 5c sells data to the enterprise 5d in a transaction of $t_{c, d}$, and purchases data from the enterprise 5d in a transaction of $t_{d, c}$. The enterprise 5d sells data to the enterprise 5e in a transaction of $t_{d, e}$, and purchases data from the enterprise 5e in a transaction of $t_{e, d}$. The enterprise 5f sells data to the enterprise 5e in a transaction of $t_{f, e}$, and purchases data from the enterprise 5e in a transaction of $t_{e, f}$. The enterprise 5g sells data to the enterprise 5e in a transaction of $t_{g, e}$, and purchases data from the enterprise 5e in a transaction of $t_{e, 9}$.

The conversion unit 32 calculates the total number of transactions between two enterprises, among the numbers of transactions for respective combinations of sellers and purchasers, by summing the number of transactions between a seller and a purchaser and the number of transactions in which the seller and the purchaser are exchanged. The converted data 43 in FIG. 8 represents, in the form of a table, the total number of transactions for each combination of the enterprises between which the transactions are performed. For example, the total number of transactions between the enterprise 5a and the enterprise 5d is $t_{a, d} + t_{d, a}$. The total number of transactions between the enterprise 5b and the enterprise 5d is $t_{b, d} + t_{d, b}$, and the total number of transactions between the enterprise 5c and the enterprise 5d is $t_{c, d} + t_{d, c}$. The total number of transactions between the enterprise 5d and the enterprise 5e is $t_{d, e} + t_{e, d}$, the total number of transactions between the enterprise 5e and the enterprise 5f is $t_{e, f} + t_{f, e}$, and the total number of transactions between the enterprise 5e and the enterprise 5g is $t_{e, g} + t_{g, e}$. Although the converted data 43 is illustrated as a table in FIG. 8, the form of the converted data 43 may be any form suitable for the processing in the calculation unit 33. For example, the converted data 43 may be a determinant representing the information illustrated in FIG. 8.

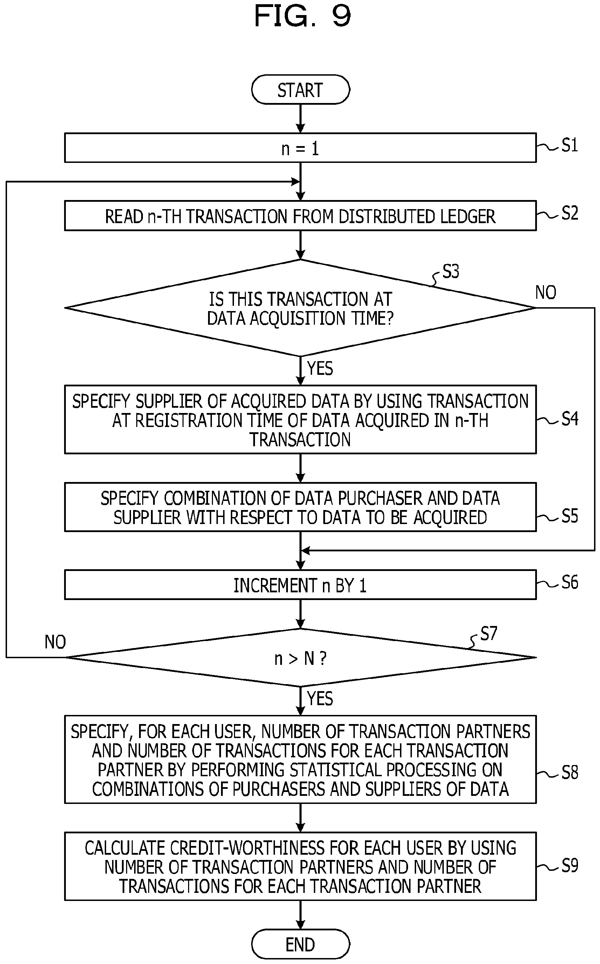

FIG. 9 is a flowchart describing an example of a method for extracting the transaction history 42. In the flowchart of FIG. 9, a constant N and a variable n are used. The constant N is the total number of transactions to be processed in order to acquire the transaction history 42 in the distributed ledger 41. The variable n is a variable used to count the transactions to be processed.

The generation unit 31 sets the variable n to 1 (step S1). The generation unit 31 reads the n-th transaction from the distributed ledger 41 (step S2). The generation unit 31 determines whether or not the n-th transaction is a transaction at a time of data acquisition (step S3). In step S3, a data acquisition transaction is handled as a transaction at the time of data acquisition. When the n-th transaction is a transaction at the time of data acquisition, the generation unit 31 specifies a supplier of the acquired data by using a transaction at a time of registering the data acquired in the nth transaction (Yes in step S3, step S4). Subsequently, the generation unit 31 specifies a combination of the data purchaser and the data supplier with respect to the data to be acquired in the n-th transaction (step S5). For example, in step S4, the generation unit 31 specifies a registration transaction for the data acquired in the n-th transaction from the distributed ledger 41, and acquires information about the supplier of the data from the specified registration transaction. Thereafter, in step S5, the generation unit 31 considers a sender of the n-th transaction as the purchaser of the data, and considers a user having registered the data acquired in the nth transaction as the supplier. The processing in steps S3 to S5 is the same as the processing having been described with reference to FIG. 6 and the like.

After the processing in step S5, or when it is determined in step S3 that the n-th transaction is not a data acquisition transaction, the generation unit 31 increments the variable n by one (No in step S3, to step S6). The generation unit 31 compares the variable n with the constant N (step S7). When the variable n is equal to or less than the constant N, the generation unit 31 repeats the processing in step S2 and the subsequent processing (No in step S7).

On the other hand, when the variable n exceeds the constant N, the conversion unit 32 performs statistical processing on the combinations of purchasers and suppliers of the data, thereby specifying, for each user, the number of transaction partners and the number of transactions for each transaction partner (step S8). In step S8, the same processing as the processing having been described with reference to FIG. 8 is carried out. Thereafter, the calculation unit 33 calculates the credit-worthiness for each user by using the number of transaction partners and the number of transactions for each transaction partner (step S9).

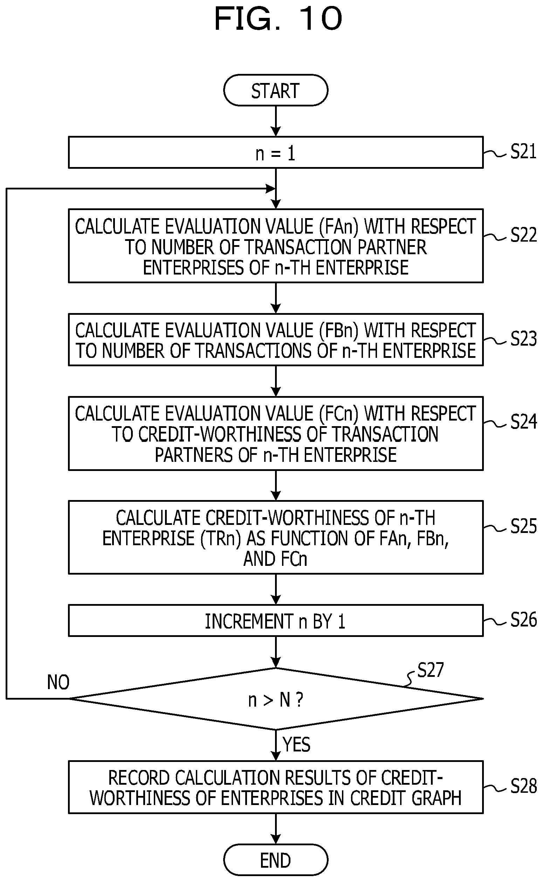

FIG. 10 is a flowchart describing an example of a calculation process of credit-worthiness. An example of a process carried out in step S9 of FIG. 9 will be described below with reference to FIG. 10. Also in FIG. 10, a constant N and a variable n are used. The constant N is the total number of enterprises to experience the credit-worthiness calculation process. The variable n is a variable for counting the enterprises to be processed. FIG. 10 is an example of the process, and may be changed in accordance with the implementation. For example, the order of steps S22 to S24 may be arbitrarily changed.

The calculation unit 33 sets the variable n to 1 (step S21). The calculation unit 33 calculates an evaluation value (FAn) with respect to the number of transaction partner enterprises of the n-th enterprise (step S22). Note that the evaluation value FAn is such a value that it is calculated to be larger as the number of transaction partner enterprises is larger. Therefore, as the evaluation value FAn is larger, the n-th enterprise is considered to have transaction results with a larger number of enterprises; for example, the credit-worthiness of the enterprise becomes higher as the evaluation value FAn thereof is larger. Subsequently, the calculation unit 33 calculates an evaluation value (FBn) with respect to the number of transactions of the n-th enterprise (step S23). The evaluation value FBn is calculated to be larger as the number of transactions is larger. As the evaluation value FBn is larger, a larger number of transactions are performed by the n-th enterprise; for example, the credit-worthiness of the enterprise becomes higher as the evaluation value FBn thereof is larger. Then, the calculation unit 33 calculates an evaluation value (FCn) with respect to the credit-worthiness of the transaction partners of the n-th enterprise (step S24). The evaluation value FCn is calculated to be larger as a larger number of enterprises having high credit-worthiness are included in the transaction partner enterprises. Therefore, as the evaluation value FCn is larger, the n-th enterprise performs transactions with a larger number of enterprises having high credit-worthiness; for example, the credit-worthiness of the enterprise becomes higher as the evaluation value FCn thereof is larger. After the processing in steps S22 to S24, the calculation unit 33 calculates credit-worthiness (TRn) of the n-th enterprise as a function of the evaluation value FAn, the evaluation value FBn, and the evaluation value FCn (step S25). Therefore, the credit-worthiness TRn is a value obtained by comprehensively evaluating the number of transaction partner enterprises, the number of transactions, and the credit-worthiness of the transaction partners of the n-th enterprise.

Thereafter, the calculation unit 33 increments the variable n by one, and compares it with the constant N (step S26 and step S27). When the variable n is equal to or less than the constant N, the processing in step S22 and the subsequent processing are repeated (No in step S27). On the other hand, when the variable n exceeds the constant N, since the credit-worthiness has been calculated for all the enterprises, the calculation unit 33 records the calculation results of the credit-worthiness of the enterprises in a credit graph 44 (Yes in step S27, to step S28).

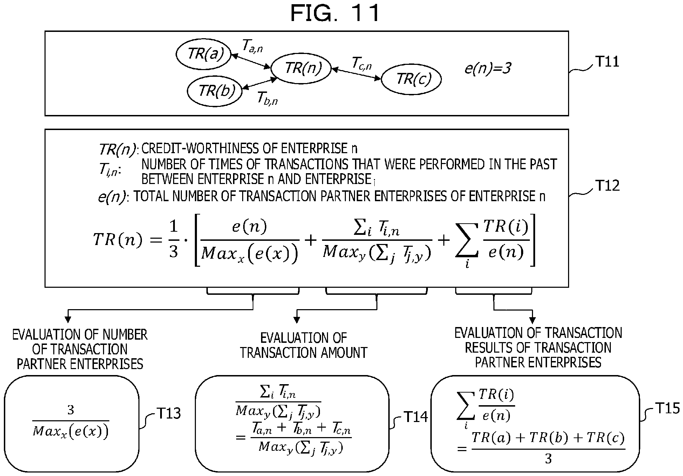

FIG. 11 is a diagram describing an example of a method for calculating credit-worthiness. In FIG. 11, it is assumed that the enterprises having a transaction relationship with the n-th enterprise (an enterprise n) to be processed are an enterprise a, an enterprise b, and an enterprise c, as illustrated in T11. It is also assumed that a transaction of $T_{a,n}$ is performed between the enterprise a and the enterprise n. Here, T represents the number of transactions performed between two enterprises indicated by the subscripts of T regardless of the direction of the transaction. For example, $T_{a,n}$ equals $(t_{a,n} + t_{n,a})$. Similarly, it is assumed that the enterprise b has a transaction amount of $T_{b,n}$ with the enterprise n, and that the enterprise c has a transaction amount of $T_{c,n}$ with the enterprise n. In FIG. 11, a case in which the calculation unit 33 uses Equation (1) for the calculation of credit-worthiness is cited as an example.

$$TR(n) = \frac{1}{3} \cdot \left( \frac{e(n)}{Max_x(e(x))} + \frac{\sum_i T_{i,n}}{Max_y(\sum_j T_{j,y})} + \sum_i \frac{TR(i)}{e(n)} \right) \quad \cdots \quad (1)$$

The first term in Equation (1) is an example of the evaluation value FAn of the number of transaction partner enterprises of the n-th enterprise. The second term in Equation (1) is an example of the evaluation value FBn of the amount of transactions of the n-th enterprise. The third term in Equation (1) is an example of the evaluation value FCn associated with the credit-worthiness of the transaction partner enterprises of the n-th enterprise. In the example of Equation (1), the ratio of each of the evaluation values FAn, FBn, and FCn to the corresponding maximum value is used in order to normalize the value of the credit-worthiness in a range from 0 to 1.

T12 indicates Equation (1) used for the calculation of the credit-worthiness by the calculation unit 33, and information represented by the variables included in Equation (1). TR(n) is credit-worthiness of the enterprise n. $T_{i,n}$ represents the number of transactions that were performed in the past between the enterprise n and an enterprise i. Further, e(n) is the total number of transaction partner enterprises of the enterprise n. For example, in the example of T11, e(n) is 3.

T13 is a calculation example of the first term in Equation (1) in the case of T11. In the case of T11, e(n) is 3.

Therefore, the value of the first term in Equation (1) for the enterprise n is $3/\text{Max}_x(e(x))$. $\text{Max}_x(e(x))$ represents the number of transaction partner enterprises of an enterprise x having the largest number of transaction partner enterprises in the network. Therefore, the first term of Equation (1) represents the ratio of the number of transaction partner enterprises of the enterprise n to the number of transaction partner enterprises of the enterprise x having the largest number of transaction partner enterprises in the network.

T14 is a calculation example of the second term in Equation (1) in the case of T11. In the case of T11, the enterprise n performs a transaction of $T_{a,n}$ with the enterprise a, a transaction of $T_{b,n}$ with the enterprise b, and a transaction of $T_{c,n}$ with the enterprise c. Accordingly, the total amount of transactions of the enterprise n is $T_{a,n} + T_{b,n} + T_{c,n}$. $\text{Max}_y(\sum_j T_{j,y})$ represents the total amount of transactions of an enterprise y having the largest amount of transactions in the network. Therefore, the second term in Equation (1) represents the ratio of the transaction amount of the enterprise n to the transaction amount of the enterprise y having the largest transaction amount in the network.

T15 is a calculation example of the third term in Equation (1) in the case of T11. In the case of T11, the credit-worthiness of the enterprise a, which is a transaction partner of the enterprise n, is TR(a), the credit-worthiness of the enterprise b is TR(b), and the credit-worthiness of the enterprise c is TR(c). Accordingly, the total sum of the credit-worthiness of the transaction partners of the enterprise n is TR(a) + TR(b) + TR(c). On the other hand, e(n) is the number of transaction partners of the enterprise n. Therefore, the third term in Equation (1) represents an average value of the credit-worthiness of the transaction partners of the enterprise n. In the third term of Expression (1), the credit-worthiness of other enterprises is used to calculate the credit-worthiness of the enterprise n. As such, at the start time of the calculation of the credit-worthiness, the calculation unit 33 calculates credit-worthiness of an enterprise whose credit-worthiness has not been determined yet as being 0. Thereafter, the calculation unit 33 appropriately repeats the recalculation of the credit-worthiness of other enterprises by using the obtained value, thereby repeating the calculation of the third term until the calculated value is converged to a set value. In a case where the value of the credit-worthiness of one enterprise is changed, since the credit-worthiness of enterprises performing transactions with the stated one enterprise is also changed, the credit-worthiness of other enterprises is recalculated as appropriate.

As illustrated in T12, in Equation (1), in order to normalize the value of the total sum of the first to third terms in a range from 0 to 1, the total sum thereof is divided by 3. Due to this, the value of the credit-worthiness of any enterprise is represented by a value in a range from 0 to 1, and the credit-worthiness becomes higher as the above value is larger.

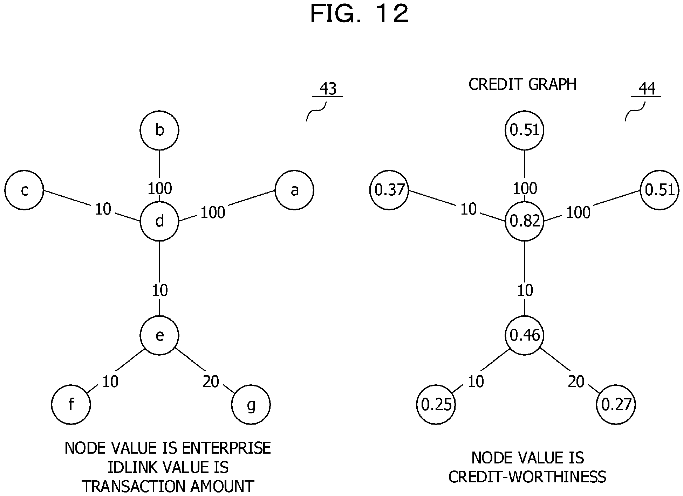

FIG. 12 is a diagram describing an example of the converted data 43 and an example of a credit graph 44. The converted data 43 in FIG. 12 indicates the number of transactions of the enterprises a to g. In the converted data 43 illustrated in FIG. 12, the name of an enterprise is described in each circle (node), and a value described on each line (link) coupling the nodes is the number of transactions between the enterprises coupled by the link. Accordingly, in the example of FIG. 12, there are 100 transactions between the enterprise a and the enterprise d, and there are 100 transactions between the enterprise b and the enterprise d. There are 10 transactions between the enterprise c and the enterprise d, and there are 10 transactions between the enterprise d and the enterprise e. Further, there are 10 transactions between the enterprise e and the enterprise f, and there are 20 transactions between the enterprise e and the enterprise g.

The credit graph 44 illustrated in FIG. 12 is a result of calculating the credit-worthiness of the enterprises a to g in accordance with the converted data 43 illustrated in FIG. 12 and Equation (1). In the example of FIG. 12, the credit-worthiness of each of the enterprises a and b is 0.51, and the credit-worthiness of the enterprise c is 0.37. The credit-worthiness of the enterprise d is 0.82, and the credit-worthiness of the enterprise e is 0.46. The credit-worthiness of the enterprise f is 0.25, and the credit-worthiness of the enterprise g is 0.27.

Among the enterprises a, b, c, f, and g, where the number of transaction partners of each enterprise is one, the order of their credit-worthiness is expressed as follows: enterprise a = enterprise b > enterprise c > enterprise g > enterprise f. The transaction amounts of the enterprise c and the enterprise f are both 10; however, the credit-worthiness of the enterprise d, which is a transaction partner of the enterprise c, is 0.82, while the credit-worthiness of the enterprise e, which is a transaction partner of the enterprise f, is 0.46. Accordingly, the credit-worthiness of the enterprise c is higher than the credit-worthiness of the enterprise f. On the other hand, among the enterprises whose transaction partners are the same in number, an enterprise having a larger amount of transactions has a higher credit-worthiness. For example, any of the enterprises a, b, and c performs transactions with the enterprise d; however, the transaction amount of each of the enterprises a and b is 100, while the transaction amount of the enterprise c is 10. For this reason, the credit-worthiness of each of the enterprises a and b is higher than the credit-worthiness of the enterprise c. Similarly, both the enterprise f and the enterprise g perform transactions with the enterprise e; however, the transaction amount of the enterprise f is 10, while the transaction amount of the enterprise g is 20. For this reason, the credit-worthiness of the enterprise g is higher than the credit-worthiness of the enterprise f.

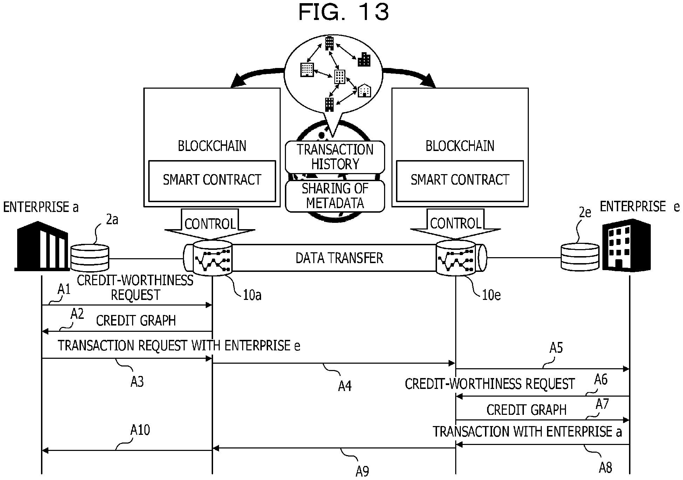

FIG. 13 is a diagram describing an example of a transaction using the credit graph 44. With reference to FIG. 13, an example of a process that is performed when the enterprise a newly starts a transaction with the enterprise e in a transaction situation as depicted in the converted data 43 of FIG. 12, will be described below. It is assumed that the enterprise a includes the terminal 2a and the communication apparatus 10a, and that the enterprise e includes the terminal 2e and the communication apparatus 10e. Both the communication apparatus 10a and the communication apparatus 10e are able to perform data transfer through the network, and share the distributed ledger 41 in which a data transfer history or the like is recorded. The sharing of a transaction history, metadata, and the like using the distributed ledger 41 is carried out by the blockchain technology. The data communication through the network may be performed by the process of the application processing unit 35 in the communication apparatus 10 in accordance with smart contracts of the blockchain technology.

First, in the enterprise a, assume that an operator of the terminal 2a has requested the communication apparatus 10a for credit-worthiness in order to start a transaction with the enterprise e (arrow A1). The communication apparatus 10a carries out the processing having been described with reference to FIGs. 5 to 12 to generate a credit graph 44a indicating the credit-worthiness of enterprises performing transactions through the network. Here, the credit graph 44a is considered to be the credit graph 44 illustrated in FIG. 12. A transmitter 21a of the communication apparatus 10a transmits the obtained credit graph 44a to the terminal 2a (arrow A2). Assume that the operator of the terminal 2a has decided to perform the transaction with the enterprise e since the credit-worthiness of the enterprise e, with which the transaction is to be started, is 0.46. Then, the operator of the terminal 2a transmits a transaction request with respect to the enterprise e to the communication apparatus 10a by using the terminal 2a (arrow A3). For example, a transaction request with respect to the enterprise e may be a data acquisition transaction for requesting the acquisition of data identified by metadata registered by the enterprise e in the network.

The communication apparatus 10a transfers the transaction request with respect to the enterprise e from the enterprise a to the communication apparatus 10e (arrow A4). At this time, the application processing unit 35a of the communication apparatus 10a may conceal an address of the terminal 2a by changing the address of the terminal 2a, which is a transmission source of the data acquisition transaction, to an address of the communication apparatus 10a. The communication apparatus 10e transfers the transaction request with respect to the enterprise e received from the communication apparatus 10a to the terminal 2e (arrow A5).

An operator of the terminal 2e checks the transaction request with respect to the enterprise e from the enterprise a. For example, a display telling the generation of the data acquisition transaction is displayed on a screen of the terminal 2e. In this case, the operator of the terminal 2e is able to recognize the generation of the transaction request with respect to the enterprise e by checking the display on the screen of the terminal 2e. Assume that, since the enterprise e has not performed a transaction with the enterprise a, the operator has decided to check the credit-worthiness in order to determine whether or not to perform the transaction with the enterprise a. Then, the operator transmits a request from the terminal 2e to the communication apparatus 10e for the credit-worthiness of enterprises performing transactions through the network (arrow A6).

The communication apparatus 10e as well generates a credit graph 44e by carrying out the processing having been described with reference to FIGs. 5 to 12. The credit graph 44e is considered to be the credit graph 44 depicted in FIG. 12. A transmitter 21e of the communication apparatus 10e transmits the obtained credit graph 44e to the terminal 2e (arrow A7). Assume that the operator of the terminal 2e has decided to perform the transaction with the enterprise a since the credit-worthiness of the enterprise a, with which the transaction is to be started, is 0.51. The operator of the terminal 2e transmits a response to the transaction request in order to perform the transaction with the enterprise a by using the terminal 2e (arrow A8). For example, the response to the transaction request may be a response including the data requested by the data acquisition transaction. An application processing unit 35e of the communication apparatus 10e transfers the response received from the terminal 2e to the communication apparatus 10a (arrow A9). At this time, also in the communication apparatus 10e, the application processing unit 35e may conceal an address of the terminal 2e by changing the address of the terminal 2e, which is a transmission source of the response, to an address of the communication apparatus 10e. When the application processing unit 35a of the communication apparatus 10a receives the response from the communication apparatus 10e, the application processing unit 35a performs processing for transferring the response to the terminal 2a (arrow A10). Due to this, the terminal 2a is able to perform the transaction with the enterprise e.

As discussed above, according to the first embodiment, a user to perform transactions through the network is able to cause the communication apparatus 10 installed by the user to calculate the credit-worthiness of each enterprise by using the information in the distributed ledger 41. Since the distributed ledger 41 is generated by the blockchain technology, there is no fear of falsification. Accordingly, since the user does not have to obtain information used for making a credit decision from a specialized research company, there is no fear that a specific organization such as a research company commits an illegal action.

<Second Embodiment>

In a second embodiment, an example of a case in which credit-worthiness of each user in a network is obtained by being divided into credit-worthiness as a data seller and credit-worthiness as a data purchaser, will be described. Also in the second embodiment, methods for generating a distributed ledger 41, a transaction history 42, and the like are the same as those in the first embodiment. A procedure of performing transactions using a calculation result of credit-worthiness is also the same as that in the first embodiment.

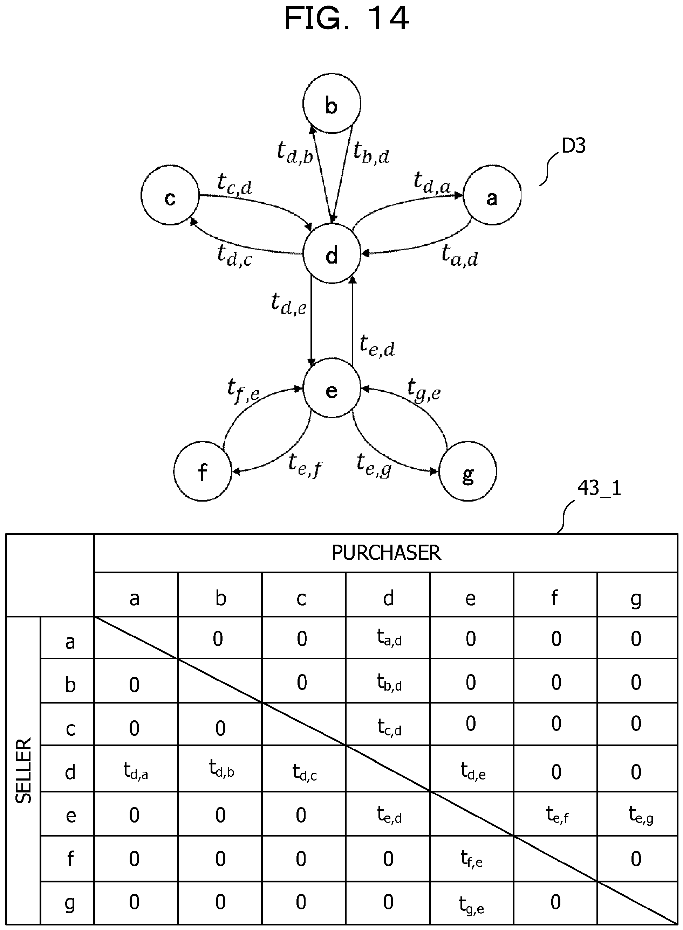

FIG. 14 is a diagram describing an example of a method for generating converted data 43 in the second embodiment. For example, it is assumed that, among enterprises a to g, there is a transaction relationship as illustrated in D3 of FIG. 14. Note that D3 illustrated in FIG. 14 is the same transaction relationship as D3 illustrated in FIG. 8.

A conversion unit 32 generates converted data 43_1 by counting the number of transactions for each combination of a seller and a purchaser. Each row of the converted data 43_1 represents the number of transactions, where an enterprise illustrated at the left end of the row becomes the seller of the data. On the other hand, each column of the converted data 43_1 represents the number of transactions, where an enterprise illustrated at the upper end of the column becomes the purchaser of the data. That is, an enterprise 5a sells data to an enterprise 5d in a transaction of $t_{a, d}$. An enterprise 5b sells data to the enterprise 5d in a transaction of $t_{b, d}$. An enterprise 5c sells data to the enterprise 5d in a transaction of $t_{c, d}$. The enterprise 5d sells data to the enterprise 5a in a transaction of $t_{d, a}$, and sells data to the enterprise 5b in a transaction of $t_{d, b}$. Furthermore, the enterprise 5d sells data to the enterprise 5c in a transaction of $t_{d, c}$, and sells data to an enterprise 5e in a transaction of $t_{d, e}$. The enterprise 5e sells data to the enterprise 5d in a transaction of $t_{e, d}$, and sells data to an enterprise 5f in a transaction of $t_{e, f}$. Furthermore, the enterprise 5e sells data to an enterprise 5g in a transaction of $t_{e, g}$. The enterprise 5f sells data to the enterprise 5e in a transaction of $t_{f, e}$. The enterprise 5g sells data to the enterprise 5e in a transaction of $t_{g, e}$. As described above, in the converted data 43 generated in the second embodiment, transactions between two enterprises are classified into data for each seller (purchaser). Also in the second embodiment, the converted data 43 may be given in a table form or a matrix form.

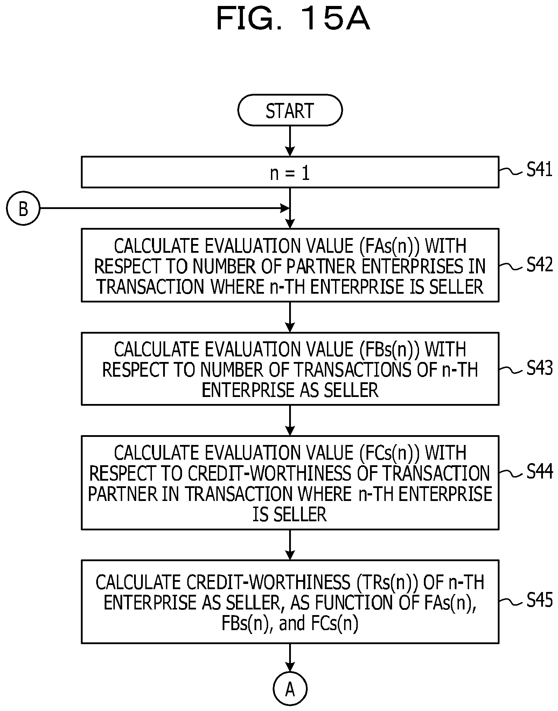

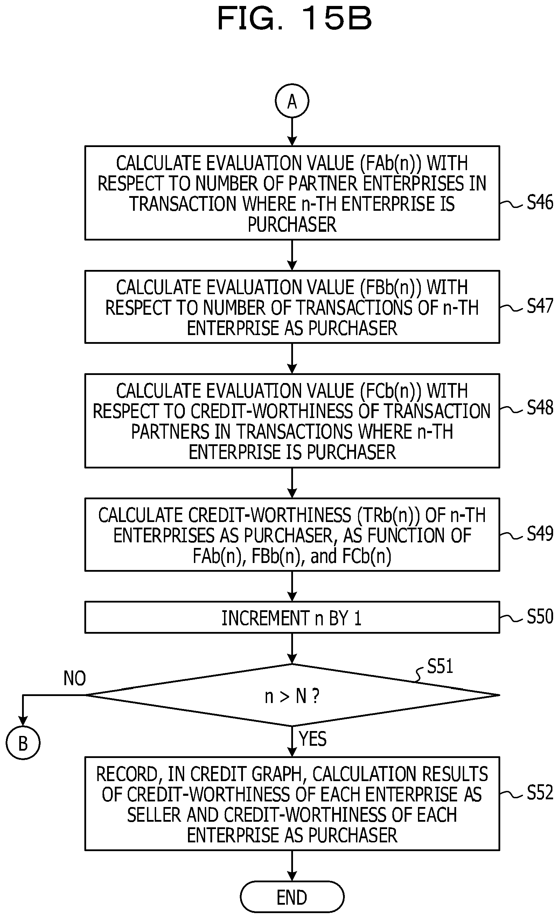

FIGs. 15A and 15B are flowcharts describing an example of a calculation process of credit-worthiness. An example of a method for calculating credit-worthiness as a data seller and credit-worthiness as a data purchaser will now be described. Also in FIGs. 15A and 15B, a constant N and a variable n are used. The constant N is the total number of enterprises to experience the credit-worthiness calculation process. The variable n is a variable for counting the enterprises to be processed.

A calculation unit 33 sets the variable n to 1 (step S41). The calculation unit 33 calculates an evaluation value FAs(n) with respect to the number of partner enterprises in a transaction where the n-th enterprise is a seller (step S42). It is assumed that the evaluation value FAs(n) is a value that is calculated to be larger as the number of partner enterprises is larger in the transaction where the n-th enterprise is a seller. Therefore, an enterprise with a larger evaluation value FAs(n) sells data to a larger number of enterprises, so that the credit-worthiness as a seller becomes high. For example, FAs(n) may be calculated by the following Equation (2).

$$FAs(n) = \frac{e_s(n)}{Max_x(e_s(x))} \quad \cdots \quad (2)$$

Here, $e_s(n)$ represents the number of sales destination enterprises of the n-th enterprise. $Max_x(e_s(x))$ represents the number of sales destination enterprises of an enterprise x having the largest number of sales destination enterprises in the network. Accordingly, in an example of Equation (2), in order to normalize the evaluation value FAs(n) in a range from 0 to 1, the evaluation value FAs(n) is calculated as a ratio with respect to the number of sales destinations of the enterprise having the largest number of sales destination enterprises.

Subsequently, the calculation unit 33 calculates an evaluation value FBs(n) with respect to the number of transactions of the n-th enterprise as a seller (step S43). The evaluation value FBs(n) is calculated to be larger as a sales amount of data by the n-th enterprise is larger. Therefore, since an enterprise with a larger evaluation value FBs(n) is said to be an enterprise selling a larger amount of data, an enterprise with a larger evaluation value FBs(n) has a higher credit-worthiness as a data seller. For example, FBs(n) may be calculated by the following Equation (3).

$$FBs(n) = \frac{\sum_i t_{n,i}}{Max_y(\sum_j t_{y,j})} \quad \cdots \quad (3)$$

Here, $\sum t_{n, i}$ represents the total amount of data sold by an enterprise n. $Max_y(\sum_j t_{y, j})$ represents the total amount of data sold by an enterprise y with the largest sales amount in the network. Accordingly, in an example of Equation (3), in order to normalize the evaluation value FBs(n) in a range from 0 to 1, the evaluation value FBs(n) is calculated as a ratio of the sales amount of data of the enterprise n to the sales amount of the enterprise having sold the largest amount of data.

Subsequently, the calculation unit 33 calculates an evaluation value FCs(n) with respect to the credit-worthiness of the transaction partner in a transaction in which the n-th enterprise is a seller (step S44). The evaluation value FCs(n) is calculated in such a manner that, as the number of transaction partner enterprises having high credit-worthiness as purchasers is larger in the transactions in which the n-th enterprise is a seller, the evaluation value FCs(n) becomes larger. Therefore, since an enterprise with a larger evaluation value FCs(n) may be said to be an enterprise selling a larger sales amount of data to the enterprises with high credit-worthiness, an enterprise with a larger evaluation value FCs(n) has a higher credit-worthiness as a seller. For example, FCs(n) is able to be calculated by the following Equation (4).

$$FCs(n) = \sum_k \frac{TR_b(k)}{e_s(n)} \quad \cdots \quad (4)$$

Here, $\sum_k TR_b(k)$ is the total sum of credit-worthiness obtained when each of the sales destinations of the data of the enterprise n is evaluated as a purchaser. Further, $e_s(n)$ represents the number of sales destination enterprises of the n-th enterprise. Accordingly, in an example of Equation (4), the evaluation value FCs(n) is calculated as an average value of the credit-worthiness of the data sales destinations as purchasers.

After the processing in steps S42 to S44, the calculation unit 33 calculates credit-worthiness $TR_s(n)$ of the n-th enterprise as a seller, as a function of the evaluation value FAs(n), the evaluation value FBs(n), and the evaluation value FCs(n) (step S45). Accordingly, the credit-worthiness $TR_s(n)$ is a value obtained by comprehensively evaluating the number of enterprises to which the n-th enterprise sold data, the amount of data having been sold by the n-th enterprise, and the credit-worthiness of enterprises to which the n-th enterprise sold the data. For example, $TR_s(n)$ is able to be calculated in accordance with the following Equation (5).

$$TR_s(n) = \frac{1}{3} \cdot \left[ \frac{e_s(n)}{Max_x(e_s(x))} + \frac{\sum_i t_{n,i}}{Max_y (\sum_j t_{y,j})} + \sum_k \frac{TR_b(k)}{e_s(n)} \right] \quad \cdots \quad (5)$$

Thereafter, the calculation unit 33 calculates an evaluation value FAb(n) with respect to the number of partner enterprises in the transactions where the n-th enterprise is a purchaser (step S46). It is assumed that the evaluation value FAb(n) is calculated to be larger as the number of partner enterprises is larger in the transactions where the n-th enterprise is a purchaser. Therefore, since an enterprise with a larger evaluation value FAb(n) is considered to have data purchase results from a larger number of enterprises, an enterprise with a larger evaluation value FAb(n) has a higher credit-worthiness as a purchaser. For example, FAb(n) is able to be calculated by the following Equation (6).

$$FAb(n) = \frac{e_b(n)}{Max_x(e_b(x))} \quad \cdots \quad (6)$$

Here, $e_b(n)$ represents the number of partner enterprises in the transactions where the n-th enterprise is a purchaser. $Max_x(e_b(x))$ represents the number of supplier enterprises for an enterprise x having the largest number of data supplier enterprises in the network. Accordingly, in an example of Equation (6), in order to normalize the evaluation value FAb(n) in a range from 0 to 1, the evaluation value FAb(n) is calculated as a ratio of the number of partner enterprises in the transactions where the n-th enterprise is a purchaser to the number of suppliers for an enterprise having the largest number of supplier enterprises.

Next, the calculation unit 33 calculates an evaluation value FBb(n) with respect to the number of transactions of the n-th enterprise as a purchaser (step S47). The evaluation value FBb(n) is calculated to be larger as a purchase amount of data by the n-th enterprise is larger. Accordingly, an enterprise with a larger evaluation value FBb(n) has a higher credit-worthiness as a data purchaser. For example, FBb(n) is able to be calculated by the following Equation (7).

$$FBb(n) = \frac{\sum_i t_{i,n}}{Max_y(\sum_j t_{j,y})} \quad \cdots \quad (7)$$

Here, $\sum_i t_{i,n}$ represents the total amount of data having been purchased by an enterprise n. $Max_y(\sum_i t_{j,y})$ represents the total amount of data having been purchased by an enterprise y having the largest purchase amount in the network. Accordingly, in an example of Equation (7), in order to normalize the evaluation value FBb(n) in a range from 0 to 1, the evaluation value FBb(n) is calculated as a ratio of the purchase amount of data by the enterprise n to the purchase amount by the enterprise having purchased the largest amount of data.

Subsequently, the calculation unit 33 calculates an evaluation value FCb(n) with respect to the credit-worthiness of transaction partners in the transactions where the n-th enterprise is a purchaser (step S48). The evaluation value FCb(n) is calculated in such a manner that, as the number of transaction partner enterprises having high credit-worthiness is larger in the transactions where the n-th enterprise is a purchaser, the evaluation value FCb(n) becomes larger. Therefore, since an enterprise with a larger evaluation value FCb(n) may be said to be an enterprise purchasing a larger amount of data from the enterprises with high credit-worthiness as sellers, an enterprise with a larger evaluation value FCb(n) has a higher credit-worthiness as a purchaser. For example, FCb(n) may be calculated by the following Equation (8).

$$FCb(n)=\sum_k \frac{TR_s(k)}{e_b(n)} \quad \cdots \quad (8)$$

Here, $\sum_k TR_s(k)$ is the total sum of credit-worthiness of enterprises selling data to an enterprise n as sellers. Further, $e_b(n)$ represents the number of supplier enterprises for the n-th enterprise. Accordingly, in an example of Equation (8), the evaluation value FCb(n) is calculated as an average value of the credit-worthiness of the data suppliers as sellers.

After the processing in steps S46 to S48, the calculation unit 33 calculates credit-worthiness $TR_b(n)$ of the n-th enterprise as a purchaser, as a function of the evaluation value FAb(n), the evaluation value FBb(n), and the evaluation value FCb(n) (step S49). Accordingly, the credit-worthiness TRb(n) is a value obtained by comprehensively evaluating the number of enterprises supplying data which the n-th enterprise purchased, the amount of data having been purchased by the n-th enterprise, and the credit-worthiness of the enterprises from which the n-th enterprise purchased data. For example, $TR_b(n)$ is able to be calculated in accordance with the following Equation (9).

$$TR_b(n)=\frac{1}{3}\cdot\left(\frac{e_b(n)}{Max_x(e_b(x))}+\frac{\sum_i t_{i,n}}{Max_y(\sum_j t_{j,y})}+\sum_k \frac{TR_s(k)}{e_b(n)}\right) \quad \cdots \quad (9)$$

Thereafter, the calculation unit 33 increments the variable n by one, and compares it with the constant N (step S50, step S51). When the variable n is equal to or less than the constant N, the processing in step S42 and the subsequent processing are repeated (No in step S51). On the other hand, when the variable n exceeds the constant N, it is considered that the credit-worthiness as a seller and the credit-worthiness as a purchaser have been calculated for all the enterprises (Yes in step S51). Then, the calculation unit 33 records, in a credit graph 44, calculation results of the credit-worthiness of each enterprise as a seller and the credit-worthiness of each enterprise as a purchaser (step S52). Note that, in the credit graph 44, a first credit graph 44 representing the credit-worthiness as a seller and a second credit graph 44 representing the credit-worthiness as a purchaser may be created; further, the credit-worthiness as a seller and the credit-worthiness as a purchaser may be depicted in a single credit graph 44.

The process having been described with reference to FIGs. 15A and 15B is an example, and the procedure of the processing may be changed in accordance with the implementation. For example, the order of the processing in steps S42 to S44 may be arbitrarily changed, and the order of the processing in steps S46 to S48 may also be arbitrarily changed. Before the calculation process of the credit-worthiness as a seller in steps S42 to S45, the calculation process of the credit-worthiness as a purchaser, illustrated in steps S46 to S49, may be carried out. Note that the equations illustrated in association with steps S42 to S49 are examples, and may be changed in accordance with the implementation.

According to the second embodiment, it is possible to analyze the credit-worthiness of an enterprise intending to perform transactions in such a manner that the credit-worthiness thereof is divided into credit-worthiness as a data supplier and credit-worthiness as a data purchaser. For example, assume that the enterprise 5a has frequently been purchasing data for a long period of time, but has just begun to sell data. In the first embodiment, since the enterprise 5a has frequently been purchasing data for a long period of time, the credit-worthiness thereof is relatively high. However, with the second embodiment, it is possible to separately determine the credit-worthiness of the enterprise 5a as a seller and the credit-worthiness thereof as a purchaser. As a result, the enterprise 5a has high credit-worthiness as a purchaser, but has relatively low credit-worthiness as a seller.

Therefore, according to the second embodiment, a user of the communication apparatus 10 is able to accurately analyze whether or not the user may trust an enterprise, with whom the user intends to start a transaction, as a data purchaser or as a data seller. Also in the second embodiment, the calculation of the credit-worthiness is carried out by using the transaction history 42, the converted data 43, and the like obtained from the distributed ledger 41. Therefore, similarly to the first embodiment, since the user does not have to obtain information used for making a credit decision from a specialized research company, there is no fear that a specific organization such as a research company commits an illegal action.

<Third Embodiment>

In a third embodiment, described is a case in which an analysis or the like of a distributed ledger 41 is carried out by a communication apparatus 10, while the generation of converted data 43 based on a transaction history 42, the calculation of credit-worthiness, and the like are carried out by other apparatuses.

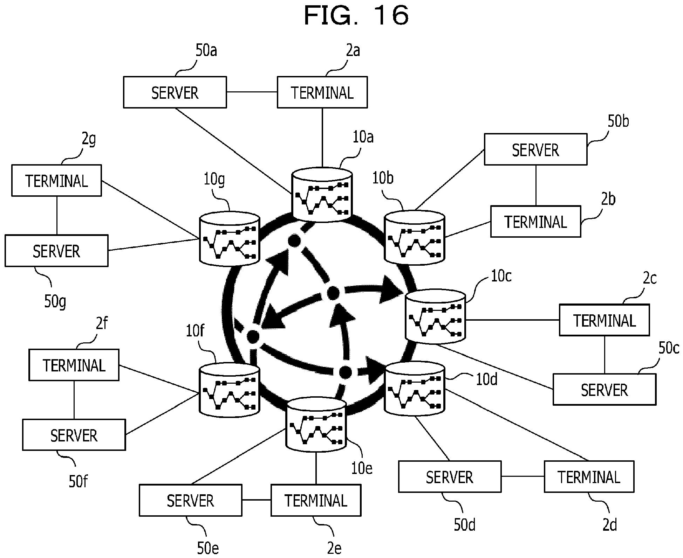

FIG. 16 is a diagram describing an example of a network according to the third embodiment. The network illustrated in FIG. 16 includes communication apparatuses 10a to 10g, terminals 2a to 2g, and servers 50a to 50g. A terminal 2 and a server 50 are coupled to each of the communication apparatuses 10. For example, the terminal 2a and the server 50a are coupled to the communication apparatus 10a, and the terminal 2b and the server 50b are coupled to the communication apparatus 10b. Here, assume that the communication apparatuses 10 communicate with each other to share the information in the distributed ledger 41; however, the terminal 2 and the server 50 do not hold the distributed ledger 41 and do not access the distributed ledger 41.

In this case, the communication apparatus 10 may include neither a conversion unit 32 nor a calculation unit 33. A generation unit 31 of the communication apparatus 10 generates the transaction history 42 from the distributed ledger 41 in response to a request or the like from the terminal 2 at the time of calculating credit-worthiness. The generation unit 31 transmits the generated transaction history 42 to the server 50 together with the information of the terminal 2 for reporting the credit-worthiness calculation result.

The server 50 generates the converted data 43 by using the received transaction history 42. Processing carried out at the time of generating the converted data 43 is the same as the processing carried out by the conversion unit 32 of the communication apparatus 10 in the first embodiment or the second embodiment. Thereafter, the server 50 calculates credit-worthiness with respect to each user in the network by processing similar to the processing carried out by the calculation unit 33 of the communication apparatus 10 in the first or second embodiment, and records the obtained result in a credit graph 44. The server 50 transmits the generated credit graph 44 to the terminal 2 reported by the communication apparatus 10.

With the modification described above, not all the calculations are carried out in the communication apparatus 10, thereby making it possible to reduce the processing load in the communication apparatus 10. Also in the third embodiment, similarly to the first and second embodiments, the user is able to acquire information on the credit-worthiness of individual transaction partners by using the accurate transaction history 42 without a risk of falsification.

<Others>

The embodiments are not limited to the above-described ones, and may be various modified. Some examples thereof will be described below.

The equations of credit-worthiness discussed above are examples, and may be changed in accordance with the implementation. For example, by weighting each term thereof used for calculating the credit-worthiness, it is possible to set a factor to be strongly reflected in the credit-worthiness. Equation (10) is given below as an example of an equation to be used in the case of performing weighting.

$$ \mathrm{TR(n)} = \frac{1}{\alpha+\beta+\gamma} \cdot \left( \alpha \frac{e(n)}{\mathrm{Max}_x(e(x))} + \beta \frac{\sum_i t_{i,n}}{\mathrm{Max}_y(\sum_i t_{i,y})} + \gamma \sum_i \frac{\mathrm{TR}(i)}{e(n)} \right) \quad \cdots \quad (1\,0) $$

In Equation (10), it is assumed that any of $\alpha$, $\beta$, and $\gamma$ is a positive value, and is set in accordance with the implementation. Although Equation (10) represents the case where weighting is performed in the first embodiment, the weighting may also be similarly performed in the second embodiment.

In the second embodiment, the case in which both the credit-worthiness as a seller and the credit-worthiness as a purchaser are calculated is described, but the stated case is an example. For example, when credit-worthiness as a seller is requested in a request message from the terminal 2 to the communication apparatus 10, the communication apparatus 10 may calculate only the credit-worthiness as a seller for each user in the network. Similarly, when the calculation of credit-worthiness as a purchaser is requested from the terminal 2, the communication apparatus 10 may calculate only the credit-worthiness as a purchaser.

The information in the tables and the distributed ledger 41 described above is an example, and these pieces of information may also be changed in accordance with the implementation.

In the above discussion, described is a case in which the calculation of the credit-worthiness and the generation of the credit graph 44 are carried out in the communication apparatus 10 in response to the request for the transaction from the terminal 2, but the timings at which the calculation of the credit-worthiness and the generation of the credit graph 44 are carried out may be changed in accordance with the implementation. For example, the communication apparatus 10 may periodically update the credit graph 44, and may provide the latest credit graph 44 in response to a request from the terminal 2.

In the above description, the case of performing the purchase and sale of data is taken as an example; however, in addition to the purchase and sale of data, it is also possible to calculate credit-worthiness with respect to a borrowing and lending relationship in a similar manner. In the case of calculating the credit-worthiness of a borrowing and lending relationship, the credit-worthiness as a lender may be calculated by processing similar to the processing of calculating the credit-worthiness as a seller. On the other hand, the credit-worthiness as a borrower may be calculated by processing similar to the processing of calculating the credit-worthiness as a purchaser.

**Claims**

1. A communication program for causing a communication apparatus which participates in a data distribution network to execute a process, the process comprising:

    generating history information of transactions by analyzing a distributed ledger that is shared among apparatuses which participate in the data distribution network, and that records information of the transactions having been performed through the data distribution network;
    calculating credit-worthiness of each of users who has performed transactions through the data distribution network, by using the history information; and
    transmitting the calculated credit-worthiness, in response to a request from a terminal configured to perform transactions via the communication apparatus, to the terminal.

2. The communication program according to claim 1, the process further comprising:

    determining, for each of users who have performed transactions through the data distribution network, a number of transaction partners of the user and a number of transactions of the user from the history information; and
    calculating the credit-worthiness of each of the user as a function of the number of transaction partners of the user, the number of transactions of the user, and credit-worthiness of the transaction partners of the user.

3. The communication program according to claim 1, the process further comprising:

    determining, for each of users who has supplied data through the data distribution network, a number of purchasers of the data supplied by the user and a number of times the data supplied by the user who is purchased from the history information; and
    calculating credit-worthiness of the user related to the data supply, as a function of the number of purchasers of the data supplied by the user, the number of times the data supplied by the user was purchased, and credit-worthiness of the purchasers of the data supplied by the user.

4. The communication program according to claim 1, the process further comprising:

    determining, for each of users having purchased data through the data distribution network, a number of suppliers of the data having been purchased by the user and a number of times the user purchased the data, from the history information; and
    calculating credit-worthiness of the user related to the data purchase, as a function of the number of suppliers of the data which has been purchased by the user, the number of times the user purchased the data, and credit-worthiness of the suppliers of the data which has been purchased by the user.

5. The communication program according to any one of claims 1 to 4,
    wherein the distributed ledger includes information in which suppliers of data possible to be supplied through the data distribution network are associated with identification information of the data, and information in which purchasers of data which has been purchased though the data distribution network are associated with identification information of the purchased data, and
    the generating the history information is executed by specifying a combination of the purchaser and the supplier associated with identification information of the data which has been purchased by the purchaser.

6.  A communication program for causing a server apparatus communicable with a communication apparatus belonging to a data distribution network to execute a process, the process comprising:

    receiving, from the communication apparatus, history information of transactions which have been performed in the data distribution network along with information of a terminal configured to perform transactions via the communication apparatus, the history information being generated by analyzing a distributed ledger shared among apparatuses which participate in the data distribution network;
    calculating credit-worthiness of each of users who have performed transactions through the data distribution network, by using the history information; and
    transmitting the calculated credit-worthiness to the above-mentioned terminal.

7.  A communication apparatus comprising:

    a generation unit configured to generate history information of transactions by analyzing a distributed ledger that is shared among apparatuses which participate in a data distribution network, and that records information of the transactions which have been performed through the data distribution network;
    a calculation unit configured to calculate credit-worthiness of each of users who have performed transactions through the data distribution network, by using the history information; and
    a transmitter configured to transmit the calculated credit-worthiness, in response to a request from a terminal configured to perform transactions via the communication apparatus, to the terminal.

8.  A communication method for causing a communication apparatus which participates in a data distribution network to execute a process, the process comprising:

    generating history information of transactions by analyzing a distributed ledger that is shared among apparatuses which participate in the data distribution network, and that records information of the transactions which have been performed through the data distribution network;
    calculating credit-worthiness of each of users who has performed transactions through the data distribution network, by using the history information; and
    transmitting the calculated credit-worthiness, in response to a request from a terminal configured to perform transactions via the communication apparatus, to the terminal.

# FIG. 1

# FIG. 2

```
                                                    ⌒40
  ┌──────────────────────────────────────────────────────┐
  │    ⌒41                          ⌒43                    │
  │  ┌──────────────┐            ┌──────────────┐          │
  │  │  DISTRIBUTED │            │   CONVERTED  │          │
  │  │    LEDGER    │            │     DATA     │          │
  │  └──────────────┘            └──────────────┘          │
  │    ⌒42                          ⌒44                    │
  │  ┌──────────────┐            ┌──────────────┐          │
  │  │  TRANSACTION │            │ CREDIT GRAPH │          │
  │  │    HISTORY   │            │              │          │
  │  └──────────────┘            └──────────────┘          │
  │                                       STORAGE UNIT     │
  └──────────────────────────────────────────────────────┘
                                                    ⌒30
  ┌──────────────────────────────────────────────────────┐
  │    ⌒31                          ⌒32                    │
  │  ┌──────────────┐            ┌──────────────┐          │
  │  │  GENERATION  │            │  CONVERSION  │          │
  │  │     UNIT     │            │     UNIT     │          │
  │  └──────────────┘            └──────────────┘          │
  │    ⌒33                          ⌒34                    │
  │  ┌──────────────┐            ┌──────────────┐          │
  │  │  CALCULATION │            │  UPDATE UNIT │          │
  │  │     UNIT     │            │              │          │
  │  └──────────────┘            └──────────────┘          │
  │    ⌒35                                                 │
  │  ┌──────────────┐                                      │
  │  │  APPLICATION │                                      │
  │  │PROCESSING UNIT│                                     │
  │  └──────────────┘                                      │
  │                                       CONTROL UNIT     │
  └──────────────────────────────────────────────────────┘
                                                    ⌒20
  ┌──────────────────────────────────────────────────────┐
  │    ⌒21                          ⌒22                    │
  │  ┌──────────────┐            ┌──────────────┐          │
  │  │  TRANSMITTER │            │   RECEIVER   │          │
  │  └──────────────┘            └──────────────┘          │
  │                                  COMMUNICATION UNIT    │
  └──────────────────────────────────────────────────────┘
                  COMMUNICATION APPARATUS  ⌒10
```

# FIG. 3

PROCESSOR 101

MEMORY 102

INPUT DEVICE 103

OUTPUT DEVICE 104

105

STORAGE DEVICE 106

MOBILE STORAGE MEDIUM DRIVING DEVICE 107

MOBILE STORAGE MEDIUM 108

NETWORK INTERFACE 109

# FIG. 4

# FIG. 5

```
┌─────────────────────────────────────┐        ┌─────────────────────────────────────┐
│   ┌─────────────────────┐            │        │   ┌─────────────────────┐            │
│   │     TIME STAMP      │            │        │   │     TIME STAMP      │            │
│   └─────────────────────┘            │        │   └─────────────────────┘            │
│   ┌─────────────────────┐            │        │   ┌─────────────────────┐            │
│   │  CHAIN INFORMATION  │            │        │   │  CHAIN INFORMATION  │            │
│   └─────────────────────┘            │        │   └─────────────────────┘            │
│   ┌───────────────────────────────┐  │        │   ┌───────────────────────────────┐  │
│   │                               │  │   ⇨    │   │                               │  │   ⇨  ...
│   │  ID OF DATA OWNER             │  │        │   │  DATA ID                      │  │
│   │  DATA REQUEST DESTINATION     │  │        │   │  ID OF DATA PURCHASER         │  │
│   │  ADDRESS                      │  │        │   │                               │  │
│   │  DATA ID                      │  │        │   │                               │  │
│   │  EXPLANATION OF DATA          │  │        │   │                               │  │
│   │  ACCESS RIGHT                 │  │        │   │                               │  │
│   │                     METADATA  │  │        │   │                 ACCESS HISTORY│  │
│   └───────────────────────────────┘  │        │   └───────────────────────────────┘  │
│                             BLOCK    │        │                             BLOCK    │
└─────────────────────────────────────┘        └─────────────────────────────────────┘
                          └ B1                                        └ B2
```

## FIG. 6

DATA REGISTRATION Tx
Tx SENDER: A
DATA ID: B

DATA SUPPLIER
USER ID: A

DATA
ACQUISITOR
USER ID: C

DATA B

D1

2a    41a    41c    2c

USER A REGISTERS DATA B

F1

+

D2

DATA ACQUISITION Tx
Tx SENDER: C
DATA ID: B

DATA SUPPLIER
USER ID: A

DATA
ACQUISITOR
USER ID: C

DATA B

2a    41a    41c    2c

USER C PURCHASES DATA B

F2

SALES USER A, PURCHASE USER C

F3

# FIG. 7

EXTRACT TRANSACTION HISTORY FROM DISTRIBUTED LEDGER

42

SELLER a, PURCHASER b, SELLER c, PURCHASER d, AND SO ON

41

T1

CONVERT FROM TRANSACTION HISTORY INTO DATA FORM REPRESENTING TRANSACTION RELATIONSHIP AND TRANSACTION AMOUNTS OF ENTERPRISES

⟷ TRANSACTION RELATIONSHIP OF ENTERPRISES

5a

60 TRANSACTIONS

100 TRANSACTIONS

5b

5 TRANSACTIONS

5d

3 TRANSACTIONS

10 TRANSACTIONS

5c

8 TRANSACTIONS

5e

20 TRANSACTIONS

5f

43

T2

# FIG. 8

| | a | b | c | d | e | f | g |
|---|---|---|---|---|---|---|---|
| a | | | | | | | |
| b | 0 | | | | | | |
| c | 0 | 0 | | | | | |
| d | $t_{a,d}+t_{d,a}$ | $t_{b,d}+t_{d,b}$ | $t_{c,d}+t_{d,c}$ | | | | |
| e | 0 | 0 | 0 | $t_{d,e}+t_{e,d}$ | | | |
| f | 0 | 0 | 0 | 0 | $t_{e,f}+t_{f,e}$ | | |
| g | 0 | 0 | 0 | 0 | $t_{e,g}+t_{g,e}$ | 0 | |

# FIG. 9

```
                    ( START )
                        │
                        ▼
┌─────────────────────────────────────────────────┐
│                     n = 1                         │────S1
└─────────────────────────────────────────────────┘
                        │
          ┌─────────────┤
          │             ▼
          │  ┌─────────────────────────────────────────────┐
          │  │  READ n-TH TRANSACTION FROM DISTRIBUTED LEDGER │────S2
          │  └─────────────────────────────────────────────┘
          │             │
          │             ▼                          S3
          │         ◇─────────────────────────◇
          │        ╱   IS THIS TRANSACTION AT    ╲      NO
          │       ◇    DATA ACQUISITION TIME?     ◇──────────┐
          │        ╲                             ╱           │
          │         ◇─────────────────────────◇             │
          │             │ YES                               │
          │             ▼                                    │
          │  ┌─────────────────────────────────────────────┐│
          │  │ SPECIFY SUPPLIER OF ACQUIRED DATA BY USING    ││
          │  │ TRANSACTION AT REGISTRATION TIME OF DATA      │────S4
          │  │ ACQUIRED IN n-TH TRANSACTION                  ││
          │  └─────────────────────────────────────────────┘│
          │             │                                    │
          │             ▼                                    │
          │  ┌─────────────────────────────────────────────┐│
          │  │ SPECIFY COMBINATION OF DATA PURCHASER AND     ││
          │  │ DATA SUPPLIER WITH RESPECT TO DATA TO BE      │────S5
          │  │ ACQUIRED                                      ││
          │  └─────────────────────────────────────────────┘│
          │             │◄───────────────────────────────────┘
          │             ▼
          │  ┌─────────────────────────────────────────────┐
          │  │             INCREMENT n BY 1                  │────S6
          │  └─────────────────────────────────────────────┘
          │             │
    NO    │             ▼                          S7
    ┌─────┴───◇─────────────────────────────◇
    │         ╲           n > N ?            ╱
    └─────────◇─────────────────────────────◇
                        │ YES
                        ▼
        ┌─────────────────────────────────────────────┐
        │ SPECIFY, FOR EACH USER, NUMBER OF TRANSACTION │
        │ PARTNERS AND NUMBER OF TRANSACTIONS FOR EACH  │
        │ TRANSACTION PARTNER BY PERFORMING STATISTICAL │────S8
        │ PROCESSING ON COMBINATIONS OF PURCHASERS AND  │
        │ SUPPLIERS OF DATA                             │
        └─────────────────────────────────────────────┘
                        │
                        ▼
        ┌─────────────────────────────────────────────┐
        │ CALCULATE CREDIT-WORTHINESS FOR EACH USER BY  │
        │ USING NUMBER OF TRANSACTION PARTNERS AND       │────S9
        │ NUMBER OF TRANSACTIONS FOR EACH TRANSACTION   │
        │ PARTNER                                        │
        └─────────────────────────────────────────────┘
                        │
                        ▼
                    (  END  )
```

# FIG. 10

START

n = 1 — S21

CALCULATE EVALUATION VALUE (FAn) WITH RESPECT TO NUMBER OF TRANSACTION PARTNER ENTERPRISES OF n-TH ENTERPRISE — S22

CALCULATE EVALUATION VALUE (FBn) WITH RESPECT TO NUMBER OF TRANSACTIONS OF n-TH ENTERPRISE — S23

CALCULATE EVALUATION VALUE (FCn) WITH RESPECT TO CREDIT-WORTHINESS OF TRANSACTION PARTNERS OF n-TH ENTERPRISE — S24

CALCULATE CREDIT-WORTHINESS OF n-TH ENTERPRISE (TRn) AS FUNCTION OF FAn, FBn, AND FCn — S25

INCREMENT n BY 1 — S26

NO

n > N ? — S27

YES

RECORD CALCULATION RESULTS OF CREDIT-WORTHINESS OF ENTERPRISES IN CREDIT GRAPH — S28

END

# FIG. 11

$TR(a)$ —$T_{a,n}$→ $TR(n)$ ←$T_{c,n}$— $TR(c)$
$TR(b)$ —$T_{b,n}$→
$e(n)=3$

T11

$TR(n)$: CREDIT-WORTHINESS OF ENTERPRISE n

$T_{i,n}$: NUMBER OF TIMES OF TRANSACTIONS THAT WERE PERFORMED IN THE PAST BETWEEN ENTERPRISE n AND ENTERPRISE $_i$

$e(n)$: TOTAL NUMBER OF TRANSACTION PARTNER ENTERPRISES OF ENTERPRISE n

$$TR(n) = \frac{1}{3} \cdot \left[ \frac{e(n)}{Max_x\big(e(x)\big)} + \frac{\sum_i T_{i,n}}{Max_y(\sum_j T_{j,y})} + \sum_i \frac{TR(i)}{e(n)} \right]$$

T12

EVALUATION OF NUMBER OF TRANSACTION PARTNER ENTERPRISES

$$\frac{3}{Max_x\big(e(x)\big)}$$

T13

EVALUATION OF TRANSACTION AMOUNT

$$\frac{\sum_i T_{i,n}}{Max_y(\sum_j T_{j,y})} = \frac{T_{a,n} + T_{b,n} + T_{c,n}}{Max_y(\sum_j T_{j,y})}$$

T14

EVALUATION OF TRANSACTION RESULTS OF TRANSACTION PARTNER ENTERPRISES

$$\sum_i \frac{TR(i)}{e(n)} = \frac{TR(a) + TR(b) + TR(c)}{3}$$

T15

# FIG. 12

43

CREDIT GRAPH

44

NODE VALUE IS ENTERPRISE
IDLINK VALUE IS
TRANSACTION AMOUNT

NODE VALUE IS
CREDIT-WORTHINESS

# FIG. 13

BLOCKCHAIN
SMART CONTRACT

TRANSACTION HISTORY
SHARING OF METADATA

BLOCKCHAIN
SMART CONTRACT

ENTERPRISE a

2a

CONTROL

CONTROL

2e ENTERPRISE e

DATA TRANSFER

10a

10e

A1 CREDIT-WORTHINESS REQUEST

A2 CREDIT GRAPH

TRANSACTION REQUEST WITH ENTERPRISE e

A3

A4

A5

CREDIT-WORTHINESS REQUEST A6

CREDIT GRAPH A7

TRANSACTION WITH ENTERPRISE a

A10

A9

A8

# FIG. 14

| | | PURCHASER | | | | | | |
|---|---|---|---|---|---|---|---|---|
| | | a | b | c | d | e | f | g |
| SELLER | a | | 0 | 0 | $t_{a,d}$ | 0 | 0 | 0 |
| | b | 0 | | 0 | $t_{b,d}$ | 0 | 0 | 0 |
| | c | 0 | 0 | | $t_{c,d}$ | 0 | 0 | 0 |
| | d | $t_{d,a}$ | $t_{d,b}$ | $t_{d,c}$ | | $t_{d,e}$ | 0 | 0 |
| | e | 0 | 0 | 0 | $t_{e,d}$ | | $t_{e,f}$ | $t_{e,g}$ |
| | f | 0 | 0 | 0 | 0 | $t_{f,e}$ | | 0 |
| | g | 0 | 0 | 0 | 0 | $t_{g,e}$ | 0 | |

# FIG. 15A

START

n = 1 — S41

B

CALCULATE EVALUATION VALUE (FAs(n)) WITH RESPECT TO NUMBER OF PARTNER ENTERPRISES IN TRANSACTION WHERE n-TH ENTERPRISE IS SELLER — S42

CALCULATE EVALUATION VALUE (FBs(n)) WITH RESPECT TO NUMBER OF TRANSACTIONS OF n-TH ENTERPRISE AS SELLER — S43

CALCULATE EVALUATION VALUE (FCs(n)) WITH RESPECT TO CREDIT-WORTHINESS OF TRANSACTION PARTNER IN TRANSACTION WHERE n-TH ENTERPRISE IS SELLER — S44

CALCULATE CREDIT-WORTHINESS (TRs(n)) OF n-TH ENTERPRISE AS SELLER, AS FUNCTION OF FAs(n), FBs(n), and FCs(n) — S45

A

# FIG. 15B

(A)

CALCULATE EVALUATION VALUE (FAb(n)) WITH RESPECT TO NUMBER OF PARTNER ENTERPRISES IN TRANSACTION WHERE n-TH ENTERPRISE IS PURCHASER — S46

CALCULATE EVALUATION VALUE (FBb(n)) WITH RESPECT TO NUMBER OF TRANSACTIONS OF n-TH ENTERPRISE AS PURCHASER — S47

CALCULATE EVALUATION VALUE (FCb(n)) WITH RESPECT TO CREDIT-WORTHINESS OF TRANSACTION PARTNERS IN TRANSACTIONS WHERE n-TH ENTERPRISE IS PURCHASER — S48

CALCULATE CREDIT-WORTHINESS (TRb(n)) OF n-TH ENTERPRISES AS PURCHASER, AS FUNCTION OF FAb(n), FBb(n), and FCb(n) — S49

INCREMENT n BY 1 — S50

NO — $n > N$ ? — S51

(B)

YES

RECORD, IN CREDIT GRAPH, CALCULATION RESULTS OF CREDIT-WORTHINESS OF EACH ENTERPRISE AS SELLER AND CREDIT-WORTHINESS OF EACH ENTERPRISE AS PURCHASER — S52

END

## FIG. 16

Europäisches
Patentamt

European
Patent Office

Office européen
des brevets

**EUROPEAN SEARCH REPORT**

Application Number

EP 20 15 4574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/075527 A1 (NAGLA GAURAV [CA] ET AL) 15 March 2018 (2018-03-15) * paragraphs [0088] - [0141] * ----- | 1-8 | INV. G06Q50/18 G06Q20/40 |
| X | US 2017/353311 A1 (SCHUKAI ROBERT JOSEPH [US] ET AL) 7 December 2017 (2017-12-07) * paragraphs [0028] - [0055], [0080] * ----- | 1-8 | |
| X | CN 105 488 675 A (BUBI (BEIJING) NETWORK TECH CO LTD) 13 April 2016 (2016-04-13) * paragraphs [0006] - [0021], [0072] * ----- | 1-8 | |

TECHNICAL FIELDS
SEARCHED      (IPC)

G06Q

The present search report has been drawn up for all claims

| Place of search | Date of completion of the search | Examiner |
|---|---|---|
| Munich | 28 February 2020 | Falò, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 696 766 A1**

## ANNEX TO THE EUROPEAN SEARCH REPORT
## ON EUROPEAN PATENT APPLICATION NO.

EP 20 15 4574

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2020

| Patent document cited in search report | | Publication date | Patent family member(s) | | Publication date |
|---|---|---|---|---|---|
| US 2018075527 | A1 | 15-03-2018 | CA | 3036725 A1 | 22-03-2018 |
| | | | US | 2018075527 A1 | 15-03-2018 |
| | | | WO | 2018049523 A1 | 22-03-2018 |
| US 2017353311 | A1 | 07-12-2017 | AU | 2017277538 A1 | 16-08-2018 |
| | | | CA | 3017578 A1 | 14-12-2017 |
| | | | CN | 108780390 A | 09-11-2018 |
| | | | EP | 3465418 A1 | 10-04-2019 |
| | | | SG | 11201806653S A | 27-09-2018 |
| | | | US | 2017353311 A1 | 07-12-2017 |
| | | | US | 2020044853 A1 | 06-02-2020 |
| | | | WO | 2017213719 A1 | 14-12-2017 |
| CN 105488675 | A | 13-04-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018098564 A
- JP 2018124930 A
- JP 2011044066 A